# EUROPEAN PATENT APPLICATION

(11) **EP 4 682 087 A1**
(43) Date of publication of application: **21.01.2026**
(21) Application number: 24869413.5
(22) Date of filing: 19.12.2024
(51) Int. Cl.: B65G 1/04, B65G 1/137, B65B 35/30, B65B 65/00

(54) **PICKING SYSTEM**

(30) Priority: 31.05.2024 CN 202410703365
(71) Applicant: Beijing Jingdong Qianshi Technology Co., Ltd., Beijing 100176 (CN)
(72) Inventor: SHANG, Chunpeng, Beijing 100176 (CN); ZHANG, Guoliang, Beijing 100176 (CN); ZHANG, Genyun, Beijing 100176 (CN); YUAN, Mingjian, Beijing 100176 (CN); ZHENG, Xiang, Beijing 100176 (CN); WANG, Guopeng, Beijing 100176 (CN); LIANG, Zhe, Beijing 100176 (CN)
(74) Representative: Page White Farrer
(86) International application number: PCT/CN2024/140703
(87) International publication number: WO 2025/246306

(57) **Abstract**

The present application discloses a picking system, including a shelf, a workstation, a traveling mechanism and an article retrieval mechanism. The shelf is configured to store an article. The workstation is arranged on the ground and includes a packing assembly. The traveling mechanism is movable between a first position proximate to the shelf and a second position proximate to the workstation. The article retrieval mechanism is liftably connected to the traveling mechanism, and configured to retrieve the article located on the shelf when the traveling mechanism is located at the first position, and convey the retrieved article to the workstation when the traveling mechanism is located at the second position, so that the packing assembly packs a normal article.

## Description

### CROSS-REFERENCE TO RELATED APPLICATIONS

The present disclosure claims priority to China Patent Application No. 202410703365.4 filed on May 31, 2024, the title of which is "PICKING SYSTEM", and which is incorporated by reference herein in its entirety.

### TECHNICAL FIELD

The present application relates to the field of warehousing logistics technology, in particular to a picking system.

### BACKGROUND

The picking system is a system for retrieving, transferring and packing an article in the warehouse according to the order information. The efficiency and accuracy of the picking system in the related art in the whole order processing flow need to be further improved.

### SUMMARY

The picking system according to the embodiment of the present application includes a shelf, a workstation, a traveling mechanism and an article retrieval mechanism; the shelf is used to store an article; the workstation is arranged on the ground and includes a packing assembly; the traveling mechanism is movable between a first position proximate to the shelf and a second position proximate to the workstation; the article retrieval mechanism is liftably connected to the traveling mechanism, and configured to retrieve the article located on the shelf when the traveling mechanism is located at the first position, and convey the retrieved article to the workstation when the traveling mechanism is located at the second position, so that the packing assembly packs a normal article.

### BRIEF DESCRIPTION OF THE DRAWINGS

Fig. 1 is a partial schematic perspective view of a shelf according to the embodiment of the present application.
Fig. 2 shows a schematic view of four storage units connected to a cross beam.
Fig. 3 is a partial schematic view of two storage units.
Fig. 4 is a partial schematic view of one end of one storage unit.
Fig. 5 is a partial schematic view of the other end of one storage unit.
Fig. 6 is a cross-sectional view taken along the line A-A in Fig. 4.
Fig. 7 is a schematic perspective view of a traveling mechanism according to the embodiment of the present application.
Fig. 8 shows a partially enlarged view at X1 in Fig. 7.
Fig. 9 shows a partially enlarged view at X2 in Fig. 7.
Fig. 10 is a schematic view of a first walking seat according to the embodiment of the present application.
Fig. 11 is a schematic view of a second walking seat according to the embodiment of the present application.
Fig. 12 is a schematic perspective view of an article retrieval mechanism and a workstation according to the embodiment of the present application from one perspective.
Fig. 13 is a schematic perspective view of an article retrieval mechanism and a workstation according to the embodiment of the present application from another perspective.
Fig. 14 is a schematic perspective view of an article retrieval mechanism according to the embodiment of the present application.
Fig. 15 is a schematic perspective view of a sorting assembly according to the embodiment of the present application.
Fig. 16 is a schematic view showing that a trigger of the sorting assembly is located between an abutment member and a pressing member of a workstation.
Fig. 17 is a schematic perspective view of a retriever according to the embodiment of the present application from one perspective.
Fig. 18 is a schematic perspective view of a retriever according to the embodiment of the present application from another perspective.
Fig. 19 shows a schematic perspective view of a retriever with an article retrieval assembly omitted.
Fig. 20 is a schematic view showing a positional relationship between the vertical plate and the lens surfaces of the third information acquisition unit and the fourth information acquisition unit.
Fig. 21 is a schematic view showing a positional relationship between the lens surface of the fifth information acquisition unit and the length direction of the slide plate.
Fig. 22 is a schematic perspective view of applying a retriever to a shelf according to the embodiment of the present application.
Fig. 23 is a schematic perspective view of the retriever according to the embodiment of the present application.
Fig. 24 is a partial schematic view of an article retrieval assembly according to the embodiment of the present application.
Fig. 25 is a partial schematic view of an article retrieval assembly according to the embodiment of the present application.
Fig. 26 is a schematic perspective view of a guide part according to the embodiment of the present application.
Fig. 27 is a schematic perspective view in which the guide part in Fig. 25 is omitted.
Fig. 28 is a schematic perspective view of a workstation according to the embodiment of the present application.
Fig. 29 is a schematic perspective view of a buffer assembly according to the embodiment of the present application.
Fig. 30 is a schematic perspective view of a buffer hopper according to the embodiment of the present application.
Fig. 31 is a schematic perspective view of a merge hopper according to the embodiment of the present application.
Fig. 32 shows that the article retrieval assembly and the locator correspond to two conveyor track assemblies located on different layers respectively.

### DETAILED DESCRIPTION

The exemplary embodiments will now be described more comprehensively with reference to the accompanying drawings. However, the exemplary embodiments can be implemented in multiple forms and should not be construed as limited to the embodiments set forth here. Rather, these embodiments are provided so that the present application will be thorough and complete, and will comprehensively convey the concepts of the exemplary embodiments to those skilled in the art. The same reference numerals in the accompanying drawings indicate the same or similar structures, and thus their detailed descriptions will be omitted.

It can be understood that, the terms "including" and "having" as well as any variations thereof in the embodiments of the present application are intended to cover non-exclusive inclusion. For example, a process, method, system, product or device that contains a series of steps or units is not limited to the steps or units as listed, but alternatively further includes steps or units that are not listed, or alternatively further includes other steps or components inherent to these processes, methods, products or devices.

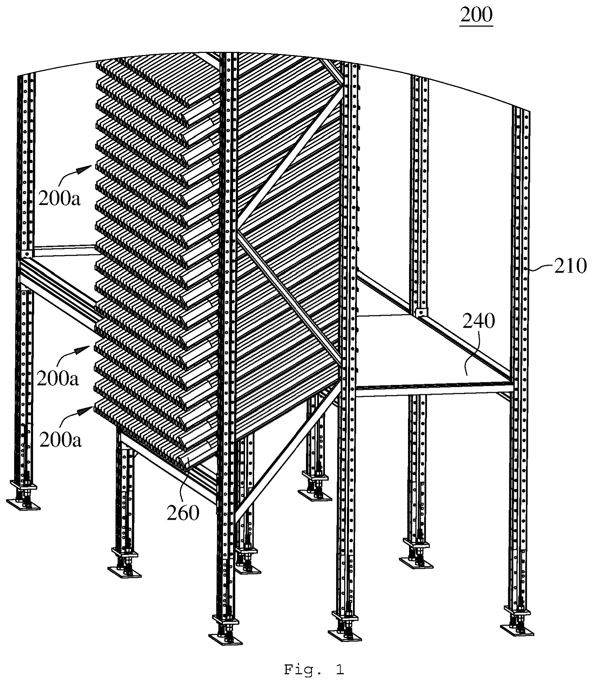

As shown in Fig. 1 to Fig. 31, the present application provides a picking system, including a shelf 200, a workstation 500, a traveling mechanism 400 and an article retrieval mechanism 300. The shelf 200 can be arranged on the ground for storing an article; the workstation 500 is arranged on the ground and includes a packing assembly 530 and an abnormality processing assembly 540. The traveling mechanism 400 is movable between a first position proximate to the shelf 200 and a second position proximate to the workstation 500; the article retrieval mechanism 300 is liftably connected to the traveling mechanism 400, and configured to retrieve the article located on the shelf 200 when the traveling mechanism 400 is located at the first position, and convey the retrieved article to the workstation 500 when the traveling mechanism 400 is located at the second position, so that the packing assembly 530 can pack the normal article or remove the abnormal article by the abnormality processing assembly 540.

In the embodiment of the present application, when the traveling mechanism 400 drives the article retrieval mechanism 300 to move to the first position, the article retrieval mechanism 300 retrieves the article located on the shelf 200 and maintains the article in the article retrieval mechanism 300. When the traveling mechanism 400 drives the article retrieval mechanism 300 to move to the second position, the article retrieval mechanism 300 can convey the retrieved article to the workstation 500, and process the article by using the packing assembly 530 and the abnormality processing assembly 540. When the article is a normal article, the packing assembly 530 packs the normal article; and when the article is an abnormal article, the abnormality processing assembly 540 removes the abnormal article.

Thus it can be seen that, under the collaborative action of the workstation 500, the traveling mechanism 400 and the article retrieval mechanism 300, the picking system according to the embodiment of the present application can retrieve, transfer and pack the article located on the shelf 200, and in addition, can also remove an abnormal article, so as to ensure the accuracy and timeliness of delivery and guarantee the efficiency and correctness of the whole order processing flow.

The shelf 200, the workstation 500, the traveling mechanism 400 and the article retrieval mechanism 300 will be described in detail below respectively.

As shown in Fig. 1, the shelf 200 according to the embodiment of the present application includes a shelf body 210 and a plurality of conveyor track assemblies 200a, wherein the plurality of conveyor track assemblies 200a are installed on the shelf body 210 and arranged along a height direction of the shelf body 210 for storing an article.

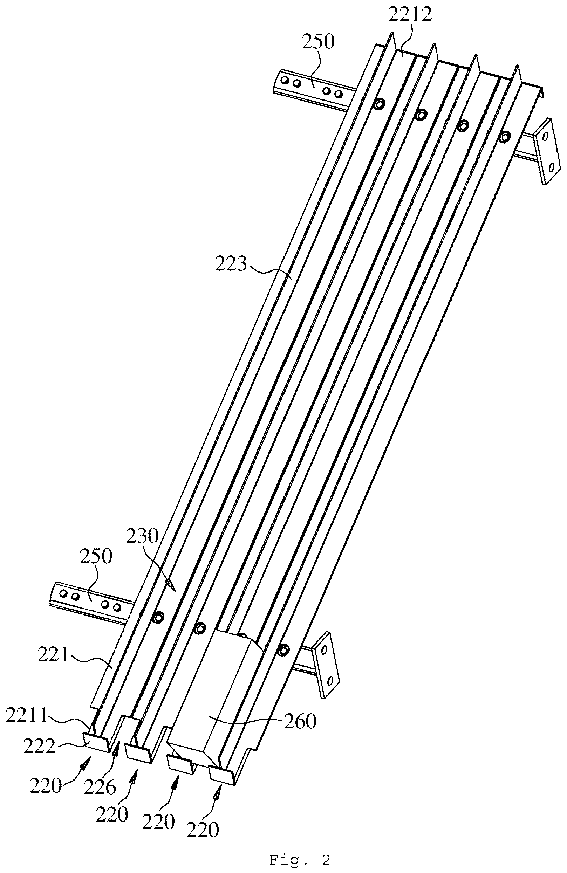

Among these, as shown in Fig. 2, each conveyor track assembly 200a includes a plurality of storage units 220 and a cross beam 250, and the plurality of storage units 220 are connected to the cross beam 250 and arranged along a length direction of the shelf body 210. The length direction of the shelf body 210 is perpendicular to the height direction. Both ends of the cross beam 250 in the longitudinal direction are connected to the shelf body 210, so that the plurality of storage units 220 are installed on the shelf body 210.

It can be understood that, in order to simplify the views, Fig. 2 only shows four storage units 220 arranged side by side, which should not be limited thereto.

In one embodiment, each conveyor track assembly 200a includes two cross beams 250 arranged at intervals along a length direction of the storage unit 220, but are not limited thereto.

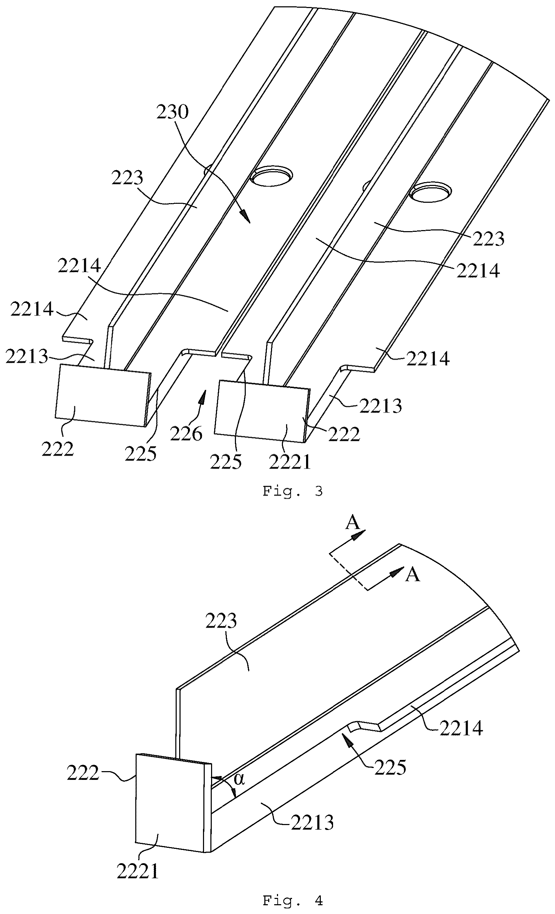

As shown in Figs. 2 and 3, each storage unit 220 includes a support plate 221 for supporting an article 260, a baffle 222 and a partition plate 223, and the support plate 221 is obliquely arranged relative to the shelf body 210. Both ends of the support plate 221 in the length direction are a first end 2211 and a second end 2212 respectively, and the height of the first end 2211 from the ground is smaller than the height of the second end 2212 from the ground. The baffle 222 is connected to the first end 2211 for stopping the article 260 on the support plate 221, and the partition plate 223 is connected to the support plate 221 and extends from the first end 2211 to the second end 2212. Two adjacent partitions 223 in two adjacent storage units 220 form a storage space 230 for storing the article 260.

In the shelf 200 according to the embodiment of the present application, the support plate 221 is obliquely arranged relative to the shelf body 210, and the first end 2211 of the support plate 221 is provided with a baffle 222 for stopping the article 260. On the one hand, due to an inclined arrangement of the support plate 221, the storage space 230 can store more an article 260, which improves the space utilization of the shelf 200. On the other hand, when an article is retrieved, after retrieving an article 260 in contact with the baffle 222, the remaining an article 260 can automatically slide down under the effect of own gravity, so as to replenish the article in time for a next retrieval action and improve the retrieval efficiency.

As shown in Fig. 2, two adjacent baffles 222 in two adjacent storage units 220 stop the same article 260 in the storage space 230.

In the embodiment of the present application, one article 260 in the storage space 230 is stopped by two adjacent baffles 222 in two adjacent storage units 220 at the same time so that a stopping force on the article 260 is more balanced, which avoids that the article 260 is deflected due to stress on one side, and avoids that the article 26 is stuck in the storage space 230 due to deflection so that it is impossible to automatically slide down.

Of course, in other embodiments, the article 260 can also be stopped by the baffle 222 in one storage unit 220, while the baffle 222 of the storage unit 220 adjacent to the storage unit 220 does not stop the article 260.

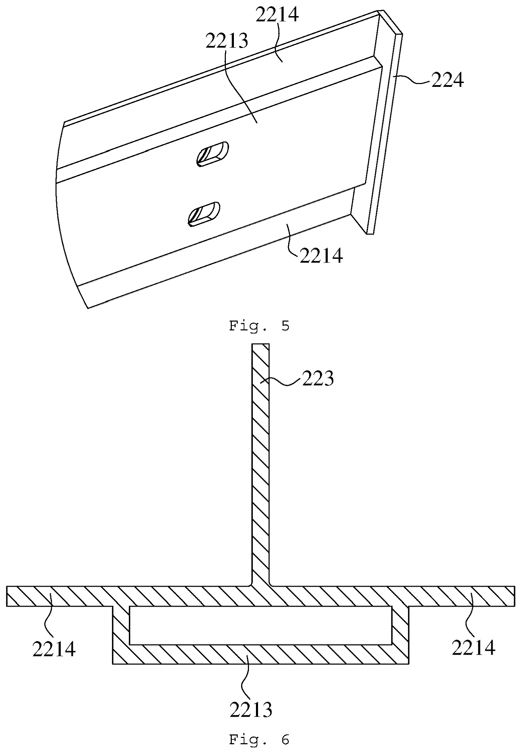

As shown in Figs. 3 and 6, the support plate 221 includes a base plate 2213 and two flaps 2214. Both ends of the base plate 2213 in the longitudinal direction are the first end 2211 and the second end 2212 respectively, and the partition plate 223 is vertically connected to the upper surface of the base plate 2213. The two flaps 2214 are connected to both sides of the base plate 2213 in the width direction respectively and extend along a length direction of the base plate 2213. Among these, the upper surface of the flap 2214 is flush with the upper surface of the base plate 2213, and the thickness of the flap 2214 is smaller than that of the base plate 2213.

In the embodiment of the present application, the structure of the support plate 221 is thick in the middle and thin on both sides, which not only reduces the weight of the support plate 221 but also saves the cost on the premise of ensuring the support of the article 260.

As an example, the base plate 2213 is a hollow structure, which further reduces the weight of the support plate 221 and saves the cost.

As shown in Fig. 6, the partition plate 223 has an orthogonal projection on the upper surface of the substrate 2213; along the width direction of the substrate 2213, the orthographic projection is located at an intermediate position of the upper surface of the substrate 2213.

That is, along the width direction of the base plate 2213, the partition plate 223 partitions the base plate 2213 into two parts with equal distance, so that the sizes of the plurality of storage spaces 230 are equal.

Of course, in other embodiments, the sizes of the plurality of storage spaces 230 can not be equal.

As shown in Fig. 3, one end of the flap 2214 proximate to the baffle 222 and the base plate 2213 form a notch 225; two adjacent notches 225 in two adjacent storage units 220 form a recess 226, and a part of the article 260 located in the storage space 230 and abutting against the baffle 222 is exposed on the lower surface of the flap 2214 through the recess 226.

In the embodiment of the present application, a recess 226 is formed between two adjacent storage units 220 for passage of a retrieval tool from bottom to top, so that the retrieval tool can pick up the article 260 in contact with the baffle 222. When the bottom surface of the article 260 is higher than the upper edge of the baffle 222, the article 260 can slide out of the storage space 230 under the effect of own gravity to complete the retrieval.

As shown in Fig. 3, one side of the baffle 222 facing away from the support plate 221 has an identifier 2221 which records the information of the article 260, so that the retrieval tool can find the storage unit 220 corresponding to the retrieved article 260 by identifying the identifier 2221.

In one embodiment, the identifier 2221 can be a two-dimensional code, a bar code or the like.

As shown in Fig. 4, the baffle 222 is attached to an end surface of the first end 2211, and an acute angle α is formed between the baffle 222 and the upper surface of the substrate 2213. In one embodiment, the baffle 222 is parallel to the height direction of the shelf body 210.

The baffle 222 is not only connected with the first end 2211 of the support plate 221, but also connected with the partition plate 223. In this way, it is possible to enhance the structural strength of the baffle 222.

As shown in Fig. 5, each storage unit 220 further includes a rear plate 224 connected to the base plate 2213 and the two flaps 2214 at the same time, and at least partially projecting from the lower surface of the base plate 2213.

It can be understood that, each storage unit 220 is provided with a rear plate 224 at least partially projecting from the lower surface of the base plate 2213. When the connection structure between the storage unit 220 and the cross beam 250 fails so that the storage unit 220 slides down, the rear plate 224 can cooperate with the cross beam 250 in stopping to prevent the storage unit 220 and the article 260 from falling off the shelf 210.

As shown in Fig. 1, the shelf 200 further includes a platform 240 connected to the shelf body 210 and located on one side where the second end 2212 of the support plate 221 is located. The platform 240 can be used for an operator to stand for replenishing the storage unit 220 or repairing the shelf 200.

For example, when the operator stands on the platform 240, the storage space 230 can be replenished from the second end 2212 of the support plate 221, and the newly replenished article 260 can automatically slide down to the first end 2211 under the effect of own weight.

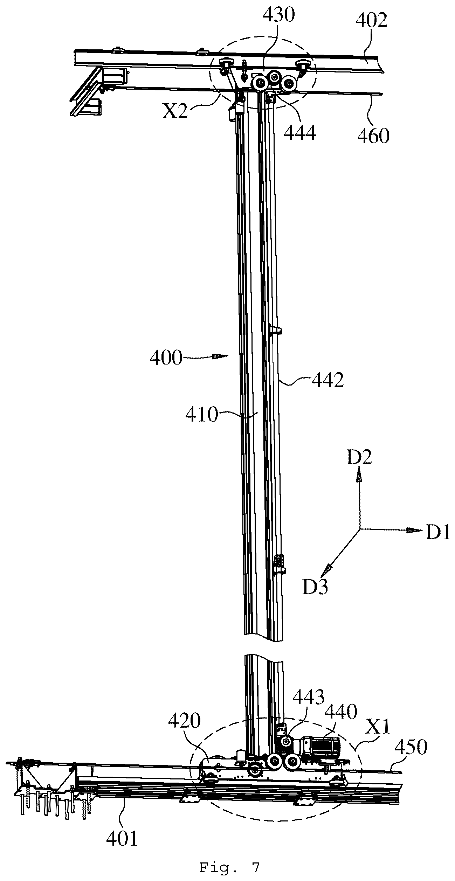

As shown in Fig. 7, the traveling mechanism 400 according to the embodiment of the present application can move along the overhead rail 402 and the ground rail 401. The ground rail 401 is arranged on the ground, and the overhead rail 402 and the ground rail 401 are oppositely arranged along the vertical direction.

For ease of description, the moving direction of the traveling mechanism 400 is defined as the first direction D1, the length direction of the upright post 410 is defined as the second direction D2, and the first direction D1 is perpendicular to the second direction D2. The direction perpendicular to the first direction D1 and the second direction D2 is defined as the third direction D3.

The traveling mechanism 400 according to the embodiment of the present application includes a first traveling seat 420, a second traveling seat 430, an upright post 410 and a driving assembly 440. The first traveling seat 420 is movably connected to the ground rail 401. The second traveling seat 430 is movably connected to the overhead rail 402. The two axial ends of the upright post 410 are connected to the first traveling seat 420 and the second traveling seat 430 respectively; the driving assembly 440 includes a third electric motor 441, a transmission shaft 442, a first driving portion 443 connected to the first traveling seat 420 and a second driving portion 444 connected to the second traveling seat 430. The two axial ends of the transmission shaft 442 are connected to the first driving portion 443 and the second driving portion 444 respectively, and the third electric motor 441 is connected to the first traveling seat 420 and drivingly connected with the first driving portion 443. The first driving portion 443 is configured to drive the first traveling seat 420 to move along the ground rail 401. The second driving portion 444 is configured to drive the second traveling seat 430 to move along the overhead rail 402.

In the traveling mechanism 400 according to the embodiment of the present application, the third electric motor 441 is drivingly connected with the first driving portion 443 connected with one axial end of the transmission shaft 442, and the other axial end of the transmission shaft 442 is connected with the second driving portion 444, so that the power of the third electric motor 441 can not only drive the first driving portion 443 to move, but also drive the second driving portion 444 to move through the transmission shaft 442. By providing the transmission shaft 442, the synchronization of the first driving portion 443 and the second driving portion 444 is effectively improved so as to ensure the walking accuracy of the walking mechanism 400.

The traveling mechanism 400 further includes a first transmission member 450 and a second transmission member 460. The first transmission member 450 is adjacent to the ground rail 401 and fixedly arranged relative to the ground rail 401. For example, the ground rail 401 is fixedly arranged on the ground. The second transmission member 460 is adjacent to the overhead rail 402 and fixedly arranged relative to the overhead rail 402. The first driving portion 443 is drivingly connected with the first transmission member 450, and the second driving portion 444 is drivingly connected with the second transmission member 460.

In the embodiment of the present application, the first driving portion 443 is drivingly connected with the first transmission member 450. Since the first transmission member 450 is fixedly arranged relative to the ground rail 401, the first driving portion 443 can move relative to the first transmission member 450, so that the first traveling seat 420 can move along the ground rail 401. The second driving portion 444 is drivingly connected with the second transmission member 460. Since the second transmission member 460 is fixedly arranged relative to the overhead rail 402, the second driving portion 444 can move relative to the second transmission member 460, so that the second traveling seat 430 can move along the overhead rail 402.

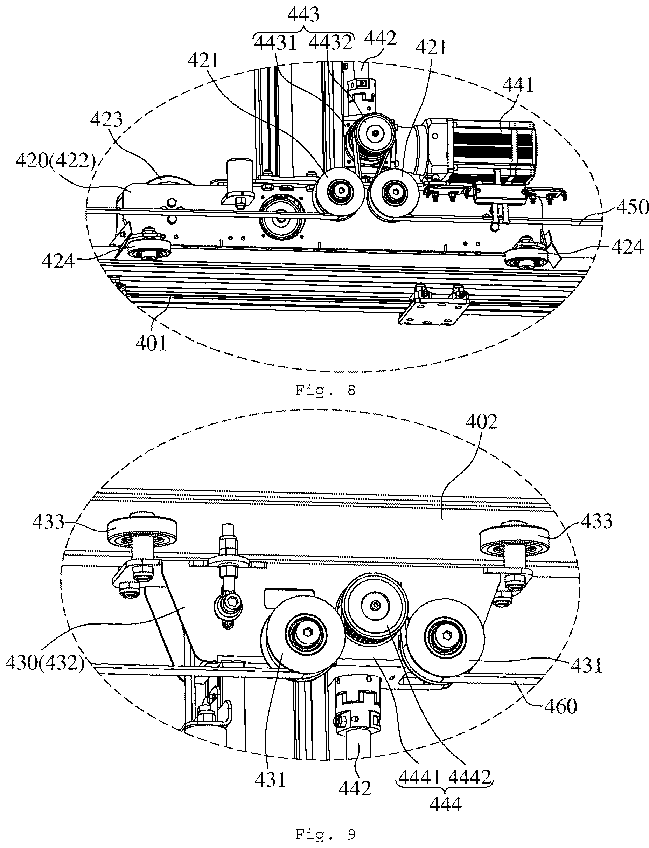

As shown in Fig. 8, the first driving portion 443 includes a first steering gear 4431 and a first rotary member 4432. The first steering gear 4431 is fixedly connected to the first traveling seat 420, and has a first input shaft, a first output shaft and a second output shaft. The first input shaft is connected with the third electric motor 441, and the first output shaft is connected with one axial end of the transmission shaft 442. The first rotary member 4432 is connected with the second output shaft, and drivingly connected with the first transmission member 450. By providing the first steering gear 4431, the power of the third electric motor 441 can be transmitted to the first output shaft and the second output shaft respectively, so that the third electric motor 441 can simultaneously drive the first rotary member 4432 and the transmission shaft 442 to rotate.

In one embodiment, the axis of the first input shaft is parallel to the first direction D1, the axis of the first output shaft is parallel to the second direction D2, and the axis of the second output shaft is parallel to the third direction D3, but it is not limited thereto.

As shown in Fig. 9, the second driving portion 444 includes a second steering gear 4441 and a second rotary member 4442. The second steering gear 4441 is fixedly connected to the second traveling seat 430 and has a second input shaft and a third output shaft, and the second input shaft is connected with the other axial end of the transmission shaft 442. The second rotary member 4442 is connected with the third output shaft, and drivingly connected with the second transmission member 460. By providing the second steering gear 4441, the power of the transmission shaft 442 can be transmitted to the second rotary member 4442.

In one embodiment, the axis of the second input shaft is parallel to the second direction D2, and the axis of the third output shaft is parallel to the third direction D3, but it is not limited thereto.

The first transmission member 450 covers at least part of the periphery of the first rotary member 4432. In one embodiment, the first transmission member 450 and the first rotary member 4432 are a structure of a synchronous belt and a synchronous wheel. For example, the first transmission member 450 is a synchronous belt and has a first tooth structure, and the outer periphery of the first rotary member 4432 has a second tooth structure, and the first tooth structure meshes with the second tooth structure.

The second transmission member 460 covers at least part of the periphery of the second rotary member 4442. In one embodiment, the second transmission member 460 and the second rotation member 4442 are a structure of a synchronous belt and a synchronous wheel. For example, the second transmission member 460 is a synchronous belt and has a third tooth structure, and the periphery of the second rotary member 4442 has a fourth tooth structure, and the third tooth structure meshes with the fourth tooth structure.

In the embodiment of the present application, the first transmission member 450 and the first rotary member 4432, and the second transmission member 460 and the second rotary member 4442 are both a structure of a synchronous belt and a synchronous wheel. Since the transmission is realized by the meshing between teeth, on the one hand, the energy loss is effectively reduced with a high transmission efficiency; on the other hand, during the transmission process, the first transmission member 450 and the first rotary member 4432, and the second transmission member 460 and the second rotary member 4442 are not likely to slide therebetween, thereby maintaining high transmission accuracy and improving the acceleration of the traveling mechanism 400.

As shown in Fig. 8, the first traveling seat 420 includes a first base seat 422, two walking wheels 423 and a plurality of first rollers 424. The first steering gear 4431 is fixedly connected to the first base seat 422. The two traveling wheels 423 are rotatably connected to both ends of the first base seat 422 along the first direction D1 respectively, for rolling contact with one side surface of the ground rail 401 facing towards the overhead rail 402. The rotation axis of each traveling wheel 423 is parallel to the third direction D3. A plurality of first rollers 424 are rotatably connected to both sides of the first base seat 422 along the third direction D3 respectively, for rolling contact with both side surfaces of the ground rail 401 along the third direction D3. The rotation axis of each first roller 424 is parallel to the second direction D2.

The first traveling seat 420 further includes a first pressing wheel 421 rotatably connected to the first base seat 422, and the rotation axis of the first pressing wheel 421 is parallel to the rotation axis of the first rotary member 4432, and abuts against the first transmission member 450 for increasing a wrap angle between the first transmission member 450 and the first rotary member 4432. By arranging the first pressing wheel 421, it is possible to increase the length of the contact arc between the first transmission member 450 and the first rotation member 4432, so as to improve the transmission stability.

As shown in Fig. 9, the second traveling seat 430 includes a second base seat 432 and a plurality of second rollers 433. The second steering gear 4441 is fixedly connected to the second base seat 432. A plurality of second rollers 433 are rotatably connected to both sides of the second base seat 432 along the third direction D3 respectively, for rolling contact with both side surfaces of the overhead rail 402 along the third direction D3. The rotation axis of each second roller 433 is parallel to the second direction D2.

The second traveling seat 430 includes a second pressing wheel 431 rotatably connected to the second base seat 432. The rotation axis of the second pressing wheel 431 is parallel to the rotation axis of the second rotary member 4442, and abuts against the second transmission member 460, for increasing a wrap angle between the second transmission member 460 and the second rotary member 4442. By arranging the second pressing wheel 431, it is possible to increase the length of the contact arc between the second transmission member 460 and the second rotation member 4442, so as to improve the transmission stability.

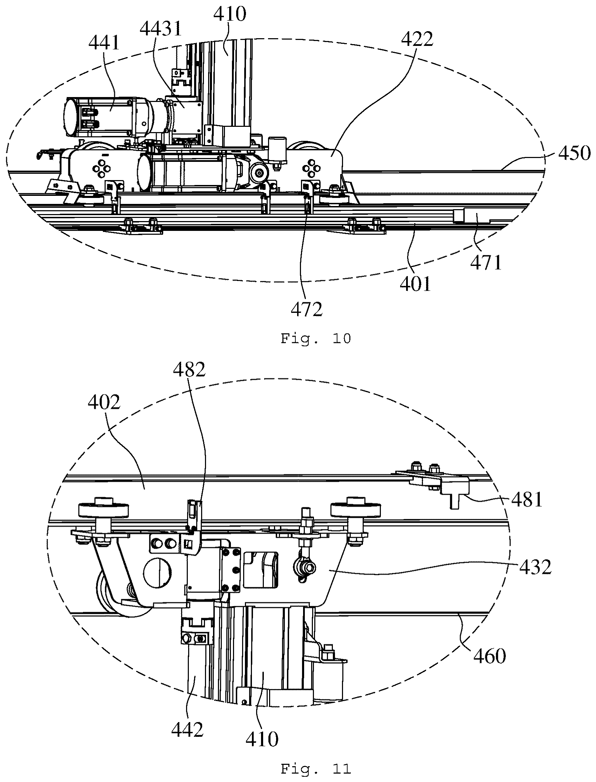

As shown in Fig. 10, one of the ground rail 401 and the first traveling seat 420 is provided with a first trigger 471, and the other of the ground rail 401 and the first traveling seat 420 is provided with a first sensor 472. The first trigger 471 is configured to trigger the first sensor 472 to cause the first sensor 472 to generate a first check signal.

In one embodiment, the ground rail 401 is provided with a first trigger 471, and the first traveling seat 420 is provided with a first sensor 472. In another embodiment, the ground rail 401 is provided with a first sensor 472, and the first traveling seat 420 is provided with a first trigger 471.

As shown in Fig. 11, one of the overhead rail 402 and the second traveling seat 430 is provided with a second trigger 481, and the other of the overhead rail 402 and the second traveling seat 430 is provided with a second sensor 482. The second trigger 481 is configured to trigger the second sensor 482 so that the second sensor 482 generates a second check signal.

In one embodiment, the overhead rail 402 is provided with a second trigger 481, and the second traveling seat 430 is provided with a second sensor 482. In another embodiment, the overhead rail 402 is provided with a second sensor 482, and the second traveling seat 430 is provided with a second trigger 481.

It can be understood that, during zero calibration, the first sensor 472 and the second sensor 482 can be triggered at the same time, so as to simultaneously send out the first check signal and the second check signal.

When one of the first sensor 472 and the second sensor 482 sends out a check signal, while the other sensor does not send out a check signal, it means that tooth jump occurs between the first transmission member 450 and the first rotary member 4432 and/or between the second transmission member 460 and the second rotary member 4442. When a tooth jump phenomenon occurs, it is possible to affect the walking synchronization of the first traveling seat 420 and the second traveling seat 430.

In the embodiment of the present application, by providing the first trigger 471 and the first sensor 472 as well as the second trigger 481 and the second sensor 482, and judging whether the first check signal and the second check signal are generated at the same time, it is possible to know whether tooth jump occurs in the synchronous belt structure, so as to timely repair the synchronous belt structure and ensure the walking synchronization.

It can be understood that, the types of the first sensor 472 and the second sensor 482 are not limited in the present application.

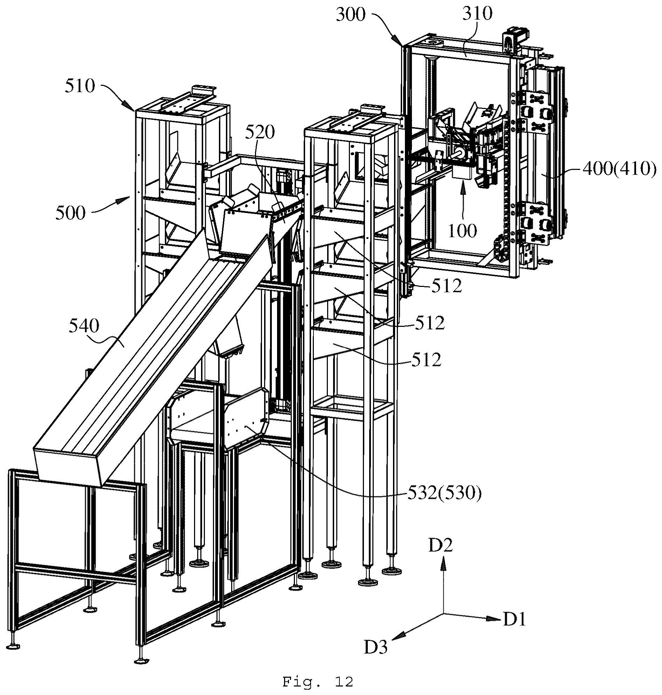

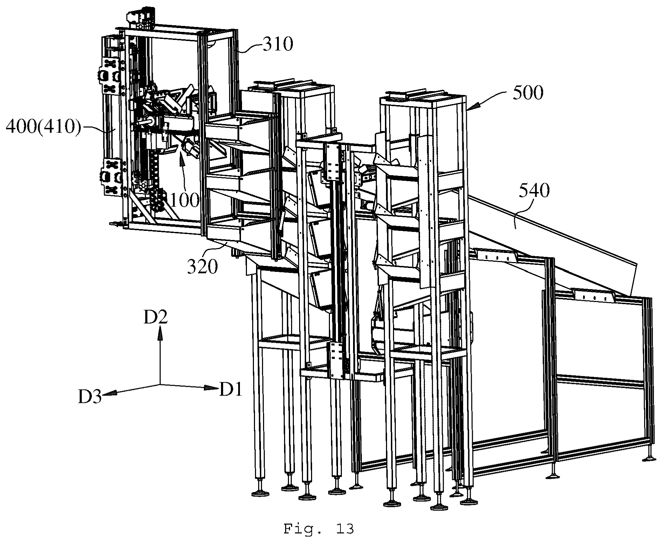

As shown in Figs. 12 and 13, the article retrieval mechanism 300 according to the embodiment of the present application is liftably connected to the traveling mechanism 400 along the second direction D2.

When an article is retrieved, the traveling mechanism 400 drives the article retrieval mechanism 300 to move to the vicinity of the shelf along the first direction D1, and the article retrieval mechanism 300 moves up and down along the second direction D2 to ensure that the article retrieval mechanism 300 is aligned with an article to be retrieved. After the article retrieval mechanism 300 retrieves the article from the shelf and places it in the article retrieval mechanism 300, the traveling mechanism 400 drives the article retrieval mechanism 300 to move to the vicinity of the workstation 500 again, so that the article retrieval mechanism 300 conveys an article to the workstation 500.

It is to be noted that, in order to simplify the views, Figs. 1 and 2 only show part of the upright post 410 of the traveling mechanism 400, while other structures are omitted.

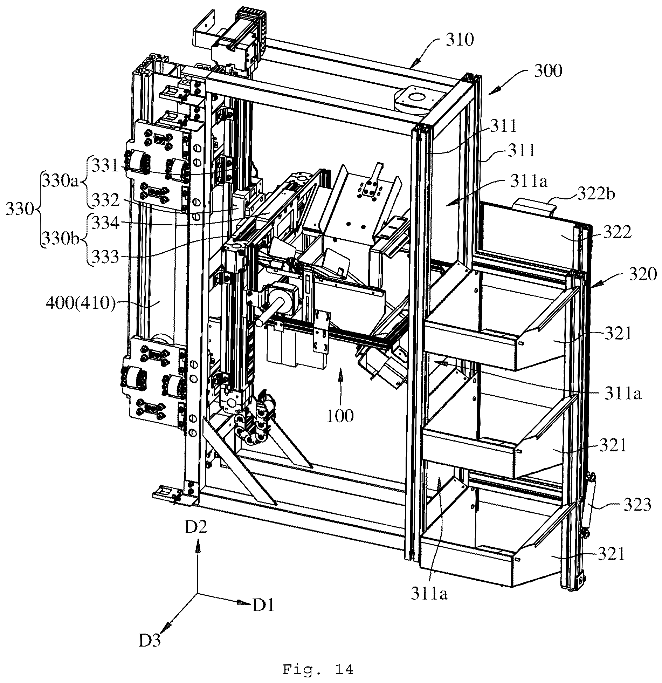

As shown in Fig. 14, the article retrieval mechanism 300 according to the embodiment of the present application includes a liftable frame 310, a retriever 100 and a sorting assembly 320. The liftable frame 310 is liftably connected to the upright post 410 of the traveling mechanism 400 along the second direction D2. Among these, the axial direction of the upright post 410 is parallel to the second direction D2. The retriever 100 is movably connected to the liftable frame 310 through the mobile assembly 330; the sorting assembly 320 is connected to the liftable frame 310 and includes a plurality of sorting hoppers 321; wherein the retriever 100 is configured to retrieve an article located on a shelf and convey an article to any one of the plurality of sorting hoppers 321.

When the article retrieval mechanism 300 according to the embodiment of the present application retrieves an article, after a first product is picked up, the retriever 100 transfers the article to one of the plurality of sorting hoppers 321, and then the retriever 100 continues to pick up a second product. If the second product is at a very close distance from the first product, the second product can be retrieved by only driving the retriever 100 to move relative to the liftable frame 310 without driving the traveling mechanism 400 to move and/or driving the liftable frame to move up and down. Afterwards, the second product is then transferred to one of the remaining empty sorting hoppers 321. When all the sorting hoppers 321 are loaded with an article, the traveling mechanism 400 is driven back to transfer all the article in the article retrieval mechanism 300 to the workstation 500.

Thus it can be seen that, in the article retrieval mechanism 300 according to the embodiment of the present application, the retriever 100 is movably connected to the liftable frame 310 through the mobile assembly 330, and the sorting assembly 320 includes a plurality of sorting hoppers 321 for accommodating an article. By way of a slight movement of the retriever 100 relative to the liftable frame 310, the retriever 100 can retrieve a plurality of articles and load them into the plurality of sorting hoppers 321 respectively, which significantly improves the retrieval efficiency of the article retrieval mechanism 300.

As shown in Fig. 14, the mobile assembly 330 includes a first mobile unit 330a and a second mobile unit 330b. The first mobile unit 330a is configured to drive the retriever 100 to move along the second direction D2. The second mobile unit 330b is configured to drive the retriever 100 to move along the third direction D3. The plurality of sorting hoppers 321 are arranged side by side along the second direction D2 or the third direction D3.

As an example, the first mobile unit 330a and the second mobile unit 330b are linear slide tables. For example, the first mobile unit 330a includes a first slide rail 331 and a first slide block 332. The first slide rail 331 is connected to the liftable frame 310, and the length direction of the first slide rail 331 is parallel to the second direction D2. The first slide block 332 is movably connected to the first slide rail 331 along the second direction D2.

The second mobile unit 330b includes a second slide rail 333 and a second slide block 334. The second slide rail 333 is connected to the first slide block 332, and the length direction of the second slide rail 333 is parallel to the third direction D3. The second slide block 334 is movably connected to the second slide rail 333 along the third direction D3. The retriever 100 is connected to the second slide block 334.

Of course, in other embodiments, the first mobile unit 330a and the second mobile unit 330b can also be other linear drive mechanisms, which will not be described in detail here.

In addition, the movement path of the retriever 100 relative to the liftable frame 310 through the mobile assembly 330 can not be straight, for example, it can also be arc, as long as it is satisfied that different articles can be picked up by moving the retriever 100 relative to the liftable frame 310.

As shown in Fig. 14, the liftable frame 310 includes two first longitudinal beams 311 arranged at intervals along the third direction D3, and the plurality of sorting hoppers 321 are connected to the two first longitudinal beams 311 and arranged side by side along the second direction D2; wherein the area between the two first longitudinal beams 311 is partitioned into a plurality of first windows 311a by the plurality of sorting hoppers 321, and the plurality of first windows 311a correspond to the plurality of sorting hoppers 321 respectively.

For example, after the retriever 100 picks up the first product, the retriever 100 can align with one of the first windows 311a by moving the first mobile unit 330a in collaboration with the second mobile unit 330b, so that the first product in the retriever 100 can pass through the first windows 311a to slide into one of the sorting hoppers 321.

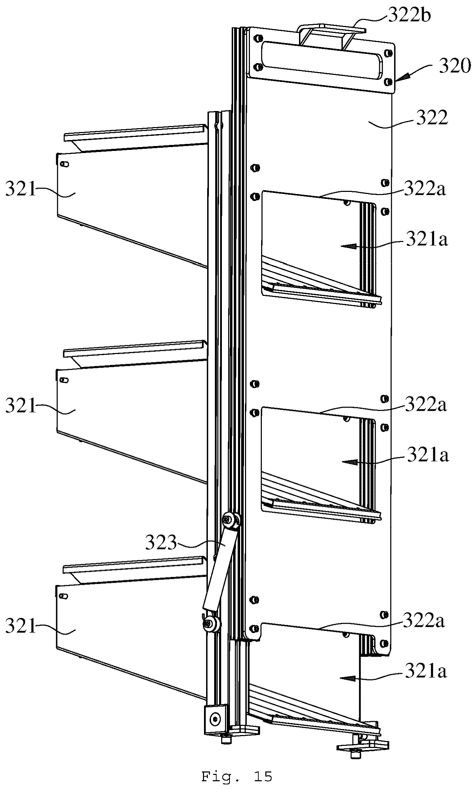

As shown in Fig. 15, each sorting hopper 321 has a first outlet 321a for an article to slide out; the sorting assembly 320 further includes a shield 322 movably connected to the liftable frame 310 between a third position and a fourth position, and the shield 322 has a plurality of second windows 322a; when the shield 322 is located at the third position, the shield 322 simultaneously encloses a plurality of first outlets 321a; and when the shield 322 is located at the fourth position, the plurality of second windows 322a communicate with the plurality of first outlets 321a respectively.

During the retrieval process of the retriever 100, the shield 322 is located at the third position, so that the shield 322 encloses a plurality of first outlets 321a of the plurality of sorting hoppers 321, so as to prevent an article from slipping out of the first outlet 321a of the sorting hopper 321. After the retriever 100 finishes the retrieval, and the traveling mechanism 400 drives the retriever 300 to return to the workstation 500, the shield 322 is located at the fourth position, and the article in each sorting hopper 321 automatically slides into the workstation 500 through the second window 322a corresponding to the sorting hopper 321.

As an example, the shield 322 is movably connected to the liftable frame 310 along a lifting direction (a second direction D2) of the liftable frame 310. Since the second direction D2 is a vertical direction, the shield 322 can move from the fourth position to the third position by own gravity.

The sorting assembly 320 further includes an elastic member 323 connected to the liftable frame 310 and the shield 322 for providing elastic force to the shield 322 to move to the third position. By providing the elastic member 323, it can be ensured that the shield 322 remains at the third position during the retrieval process of the article retrieval mechanism 300, so as to prevent an article in the sorting assembly 320 from sliding off resulting from the shield 322 accidentally opening the first outlet 321a of the sorting hopper 321.

In one embodiment, the elastic member 323 can be an extension spring, but is not limited thereto.

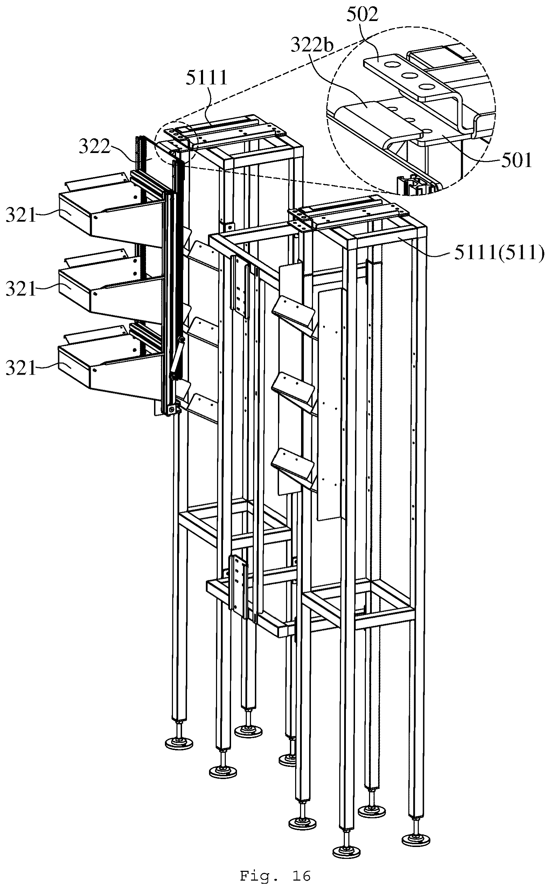

As shown in Fig. 16, the top of the shield 322 has a trigger 322b. The workstation 500 has an abutment member 501, and the respective orthographic projections of the abutment member 501 and the trigger 322b on a target plane have overlapping first projections. Among these, the target plane is perpendicular to the lifting direction (the second direction D2) of the liftable frame 310. When the liftable frame 310 descends, the abutment member 501 is configured to abut against the trigger 322b, so that the shield 322 moves from the third position to the fourth position.

In the embodiment of the present application, when the traveling mechanism 400 drives the article retrieval mechanism 300 to move to the vicinity of the workstation 500, at this time the trigger 322b is located above the abutment member 501. The respective orthographic projections of the abutment member 501 and the trigger 322b have overlapping first projections on a target plane. When the liftable frame 310 drives the article retrieval mechanism 300 to descend, the abutment member 501 abuts against the trigger 322b, so that the shield 322 moves from the third position to the fourth position. Thus it can be seen that, by providing the abutment member 501 and the trigger 322b, when the liftable frame 310 descends, the shield 322 can automatically open the first outlet 321a of the sorting hopper 321, so that an article in the sorting hopper 321 can slides to the workstation 500.

As shown in Fig. 16, the workstation 500 also has a pressing member 502. The respective orthogonal projections of the pressing member 502 and the trigger 322b on a target plane have overlapping second projections. When the liftable frame 310 ascends, the pressing member 502 is configured to stop the trigger 322b.

When all the article in the sorting hopper 321 slide to the workstation 500, the traveling mechanism 400 can drive the article retrieval mechanism 300 to perform a next retrieval action. In normal circumstances, after the trigger 322b leaves the abutment member 501, the shield 322 can move from the fourth position to the third position under the effect of own gravity of the shield 322 and/or under the effect of elastic force of the elastic member 323. However, under abnormal circumstances, for example, when the shield 322 does not slide smoothly relative to the liftable frame 310, the shield 322 is likely to be stuck so that it is impossible to move to the third position under the effect of gravity and/or elastic force, which results in that the first outlet 321a of the sorting hopper 321 is still in an open state. At this time, if a retrieval action is performed, the article can slide out from the first outlet 321a of the sorting hopper 321.

In the embodiment of the present application, by providing the pressing member 502, it is possible to avoid that the shield 322 cannot be reset to the third position due to abnormalities, so as to ensure that a next retrieval action is normally performed.

As shown in Fig. 16, the pressing member 502 and the abutment member 501 are oppositely arranged along the second direction D2, and the respective orthogonal projections of the pressing member 502 and the abutment member 501 on a target plane have overlapping third projections.

It is to be noted that, along the second direction D2, the trigger 322b is at least partially located between the pressing member 502 and the abutment member 501. In order to ensure the normal lifting of the liftable frame 310 and avoid the interference of the pressing member 502, the movement of the traveling mechanism 400 and the liftable frame 310 is performed in stages:

During the process of returning to the workstation 500, the traveling mechanism 400 drives the article retrieval mechanism 300 to move to the second position. When the article retrieval mechanism 300 is located at the first intermediate position, the trigger 322b is located outside the space surrounded by the abutment member 501 and the pressing member 502, that is, the orthogonal projections of the trigger 322b and the abutment member 501 on a target plane are not present with an overlapping projection. Afterwards, the traveling mechanism 400 translates along the first direction D1, so that the article retrieval mechanism 300 moves to the second intermediate position. When the article retrieval mechanism 300 is located at the second intermediate position, the trigger 322b is at least partially located between the abutment member 501 and the pressing member 502. Finally, the liftable frame 310 drives the article retrieval mechanism 300 to descend and move to the third intermediate position. During the movement process of the article retrieval mechanism 300 from the second intermediate position to the third intermediate position, the abutment member 501 abuts against the trigger 322b to move the shield 322 from the third position to the fourth position.

During the process of leaving the workstation 500 to perform the retrieval, the article retrieval mechanism 300 moves from the third intermediate position to the second intermediate position. If the shield 322 is not stuck due to abnormalities, the shield 322 can automatically return from the fourth position to the third position, and then the traveling mechanism 400 translates along the first direction D1 to move the trigger 322b out of the space surrounded by the abutment member 501 and the pressing member 502. If the shield 322 is stuck at a certain position of the liftable frame 310 due to abnormalities, during the movement process of the article retrieval mechanism 300 from the third intermediate position to the second intermediate position, the pressing member 502 can press the trigger 322b, so that the shield 322 is reset to the third position under the effect of the abutment force, which avoids that the first outlet 321a of the sorting hopper 321 is still in an open state. Afterwards, the traveling mechanism 400 translates along the first direction D1 to move the trigger 322b out of the space surrounded by the abutment member 501 and the pressing member 502.

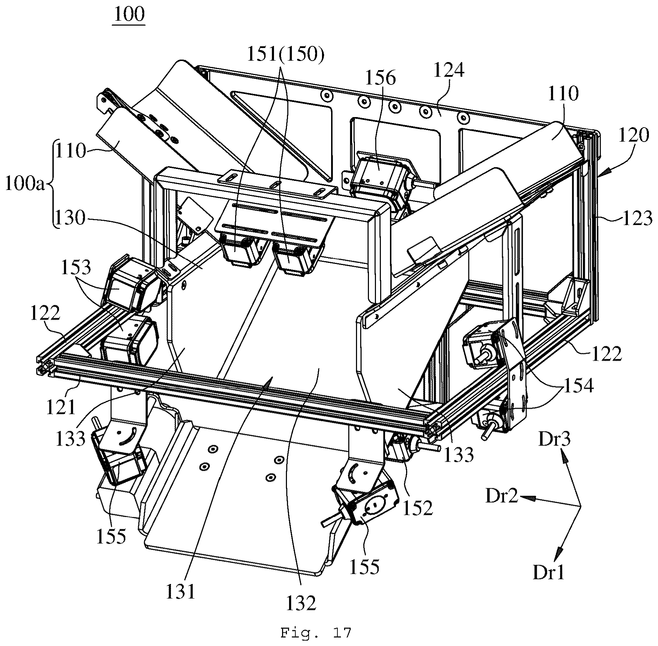

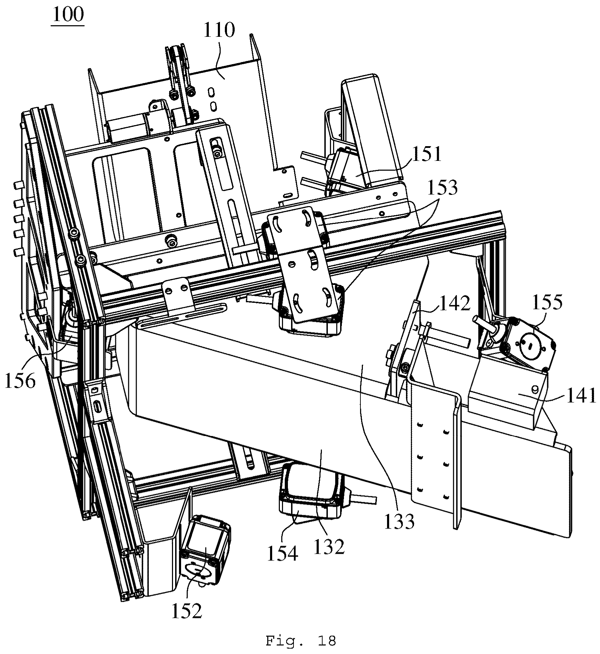

As shown in Figs. 17 and 18, the retriever 100 according to the embodiment of the present application includes a machine rack 120, an article retrieval unit 100a and a plurality of information acquisition units 150. The article retrieval unit 100a is installed on the machine rack 120, and includes an article retrieval assembly 110 and an article retrieval hopper 130 made of a transparent material. The article retrieval assembly 110 is configured to retrieve an article stored on a shelf and convey it into the article retrieval hopper 130. The plurality of information acquisition units 150 are arranged around the article retrieval hopper 130 for acquiring the preset information of the article located in the article retrieval hopper 130.

In the retriever 100 according to the embodiment of the present application, the plurality of information acquisition units 150 are arranged around the article retrieval hopper 130. After the article retrieval assembly 110 conveys the article to the article retrieval hopper 130, the plurality of information acquisition units 150 can collect the preset information of the article in time to further judge whether the article is a correct product. If the article is a correct product, a subsequent packing operation will be performed. If the article is not a correct product, it will be processed as an abnormal product, thus avoiding that the order processing efficiency is affected due to the retrieval of a false product. In addition, the retriever according to the embodiment of the present application includes a plurality of information acquisition units 150, and each information acquisition unit 150 can capture the preset information of the article, thereby effectively improving the success rate of obtaining the preset information of the article by the information acquisition unit 150, and further improving the review efficiency.

It can be understood that, the method of obtaining the preset information of the article by the information acquisition unit 150 has a plurality of implementations. For example, the information acquisition unit 150 can use code scanning technology, image recognition technology, OCR (Optical Character Recognition) character recognition technology, electronic tag technology and the like.

In addition, the preset information of the target product can be the commodity information, for example, including but not limited to: commodity number, manufacturer code, global trade item number, production date, batch number, etc.

Next, the retriever of the present application will be described by taking the information acquisition unit 150 as an image acquisition device as an example. Among these, the image acquisition device can be a camera, a digital camera, a scanner, etc. The image acquisition device can obtain the preset information of the article through the one-dimensional code, the two-dimensional code and the commodity appearance characteristics on the target product, which is not limited in the present application.

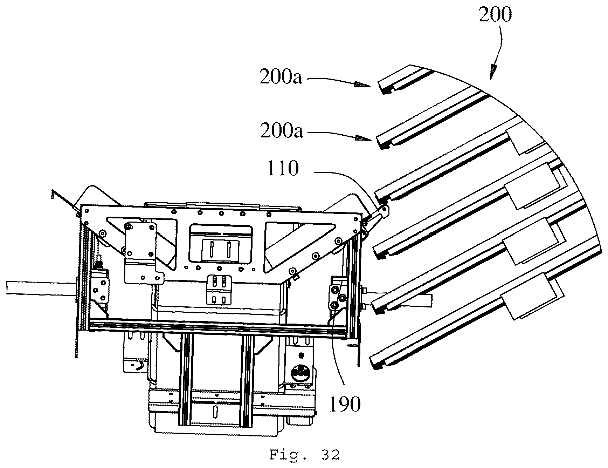

As shown in Fig. 32, the retriever 100 further includes a locator 190 connected to the machine rack 120 for locating the retriever 100 to a designated position of the shelf 200. Specifically, the locator 190 is configured to locate the retriever 100 to a designated conveyor track assembly 200a. Among these, the article retrieval assembly 110 of the retriever 100 and the locator 190 correspond to two conveyor track assemblies 200a located on different layers respectively.

Specifically, when an article is retrieved, if the article retrieval assembly 110 needs to retrieve an article located on one conveyor track assembly 200a, the locator 190 locates the retriever 100 to one conveyor track assembly 200a below the conveyor track assembly 200a, so as to achieve cross-level retrieval. For example, the article retrieval assembly 110 and the locator 190 correspond to two adjacent conveyor track assemblies 200a respectively, or the article retrieval assembly 110 and the locator 190 correspond to the conveyor track assembly 200a on both sides of one of the conveyor track assemblies 200a respectively.

It can be understood that, the locator 190 can locate the retriever 100 to a designated conveyor track assembly 200a through the code scanning technology, the image recognition technology and the like. For example, the locator 190 can be a camera or a digital camera, and the conveyor track assembly 200a is provided with a one-dimensional code or a two-dimensional code. By obtaining the information corresponding to the one-dimensional code or the two-dimensional code through the locator 190, it can be implemented that the retriever 100 moves to a designated conveyor track assembly 200a, and the article retrieval assembly 110 correspondingly moves to a designated conveyor track assembly 200a to be retrieved.

As shown in Fig. 17, the retriever 100 according to the embodiment of the present application includes two article retrieval assemblies 110 arranged oppositely along the left-right direction of the machine rack 120, so that the retrieval efficiency can be improved.

Among these, the article retrieval assembly 110 is connected to the frame 120, and the article retrieval hopper 130 is connected to the two article retrieval assemblies 110. Of course, in other embodiments, the article retrieval hopper 130 can also be directly connected with the machine rack 120, which is not limited in the present application.

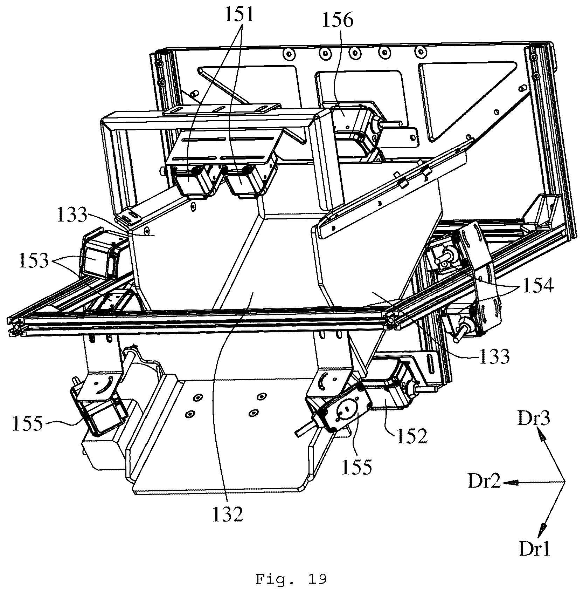

As shown in Fig. 19, the article retrieval hopper 130 includes a slide plate 132 arranged obliquely and two vertical plates 133. The two vertical plates 133 are connected to both sides of the slide plate 132 in the width direction Dr2 respectively, and form a fourth outlet 131 for an article to slide out.

The plurality of information acquisition units 150 include a first information acquisition unit 151, a second information acquisition unit 152, a third information acquisition unit 153, a fourth information acquisition unit 154, a fifth information acquisition unit 155 and a sixth information acquisition unit 156.

The first information acquisition unit 151 and the second information acquisition unit 152 are located on both sides of the slide plate 132 in the thickness direction Dr3 respectively, and the lens surfaces of the first information acquisition unit 151 and the second information acquisition unit 152 face towards the slide plate 132. The third information acquisition unit 153 and the fourth information acquisition unit 154 are located on the opposite sides of the two vertical plates 133 respectively, and the lens surfaces of the third information acquisition unit 153 and the fourth information acquisition unit 154 face towards the respective corresponding vertical plates 133 respectively. The fifth information acquisition unit 155 is arranged on one side where the fourth outlet 131 of the article retrieval hopper 130 is located, and the lens surface of the fifth information acquisition unit 155 faces towards the fourth outlet 131. The sixth information acquisition unit 156 is arranged on one side away from the fourth outlet 131 in the length direction Dr1 of the article retrieval hopper 130, and the lens surface of the sixth information acquisition unit 156 faces towards the space between the two vertical plates 133. The length direction Dr1, the width direction Dr2 and the thickness direction Dr3 are perpendicular to each other.

Thus it can be seen that, in the embodiment of the present application, the information acquisition units 150 are arranged at both ends of the article retrieval hopper 130 along the length direction Dr1, on both sides of the thickness direction Dr3 and on both sides of the width direction Dr2. That is, the information acquisition units 150 are arranged at all the six surfaces of the article retrieval hopper 130, so that the plurality of information acquisition units 150 substantially cover the outer surface of the article, which significantly improves the success rate of capturing the preset information of the article by the information acquisition unit 150 and further improves the review efficiency.

It can be understood that, the article retrieval hopper 130 is made of a transparent material, so that light can pass through the article retrieval hopper 130, thereby preventing that the article retrieval hopper 130 blocks the information acquisition units 150 located outside the vertical plate 133 and on the bottom surface of the slide plate 132 so that it is impossible to acquire the preset information of the article.

Among these, the present application is not limited to a transparent material, as long as light can pass therethrough. For example, the transparent material includes but is not limited to glass, acrylic, polycarbonate, etc.

As shown in Figs. 17 and 19, the number of the information acquisition units 150 arranged on each of the six surfaces of the article retrieval hopper 130 can be one or plural. For example, the number of the first information acquisition units 151 on the upper surface of the slide plate 132 is two, and the two first information acquisition units 151 are arranged along the width direction Dr2. The number of the second information acquisition units 152 on the lower surface of the slide plate 132 is one; and the number of the third information acquisition units 153 and the number of the fourth information acquisition units 154 are both two. The two third information acquisition units 153 are arranged along the thickness direction Dr3, and the two fourth information acquisition units 154 are arranged along the thickness direction Dr3. The number of the fifth information acquisition units 155 is two, and the two fifth information acquisition units 155 are arranged along the width direction Dr2 and correspond to the positions of the two vertical plates 133 along the length direction Dr1 respectively. The number of the sixth information acquisition units 156 is one.

The lens surface of the first information acquisition unit 151 and the lens surface of the second information acquisition unit 152 are both parallel to the slide plate 132. Since the first information acquisition unit 151 and the second information acquisition unit 152 are arranged on both sides of the slide plate 132 in the thickness direction Dr3 respectively, the lens surfaces of the two information acquisition units are both parallel to the slide plate 132, so that the range captured by each information acquisition unit can cover the slide plate 132 as much as possible, which improves the photographing success rate.

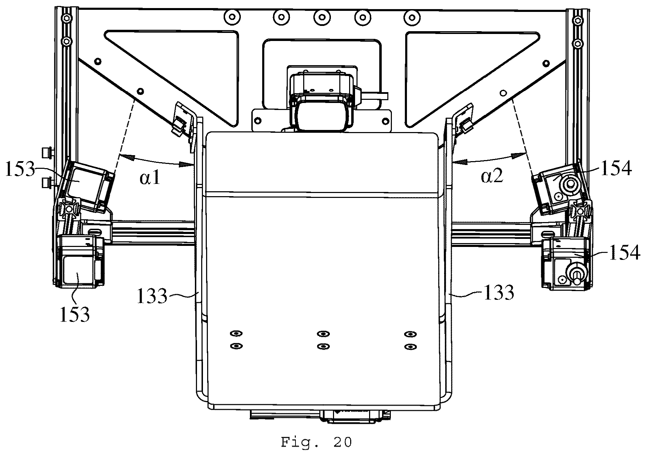

As shown in Fig. 20, the number of the third information acquisition unit 153 and the number of the fourth information acquisition unit 154 are both two; the lens surface of one of the third information acquisition units 153 is parallel to a corresponding vertical plate 133, and a first target included angle α1 is formed between the lens surface of the other third information acquisition unit 153 and a corresponding vertical plate 133. The lens surface of one of the fourth information acquisition units 154 is parallel to a corresponding vertical plate 133, and a second target included angle α2 is formed between the lens surface of the other fourth information acquisition unit 154 and a corresponding vertical plate 133.

In the embodiment of the present application, two third information acquisition units 153 are located outside one of the vertical plates 133, and the capturing surfaces of the two third information acquisition units 153 are not parallel but have an included angle, so that the two third information acquisition units 153 can capture the article in different postures. For example, when the article falls off on the slide plate 132, the two-dimensional code thereof is parallel to the vertical plate 133, so that the third information acquisition unit 153 with a lens surface parallel to the vertical plate 133 can acquire a two-dimensional code of the article. If there is an included angle between the two-dimensional code and the vertical plate 133 when the article falls off on the slide plate 132, the third information acquisition unit 153 with a lens surface forming an included angle with the vertical plate 133 can acquire the two-dimensional code of the article.

Similarly, two fourth information acquisition units 154 are located outside the other vertical plate 133, and the capturing surfaces of the two fourth information acquisition units 154 are not parallel but have an included angle, so that the two fourth information acquisition units 154 can capture the article in different postures. For example, when the article falls off on the slide plate 132, the two-dimensional code thereof is parallel to the vertical plate 133, so that the fourth information acquisition unit 154 with a lens surface parallel to the vertical plate 133 can acquire a two-dimensional code of the article. If there is an included angle between the two-dimensional code and the vertical plate 133 when the article falls off on the slide plate 132, the fourth information acquisition unit 154 with a lens surface forming an included angle with the vertical plate 133 can acquire the two-dimensional code of the article.

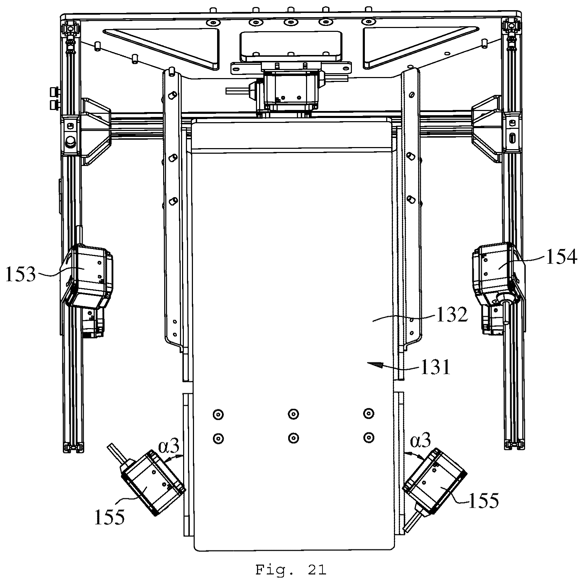

As shown in Fig. 21, the number of the fifth information acquisition units 155 is two, the lens surfaces of the two fifth information acquisition units 155 are perpendicular to the slide plate 132, and a third target included angle α3 is formed between the lens surface of each fifth information acquisition unit 155 and the length direction Dr1 of the slide plate 132. By designing a third target included angle α3 formed between the lens surface of the fifth information acquisition unit 155 and the length direction Dr1 of the slide plate 132, the arrangement position of the fifth information acquisition unit 155 ensures that the fifth information acquisition unit 155 obliquely faces towards the article without affecting the article from sliding out of the fourth outlet 131, so as to improve the photographing success rate.

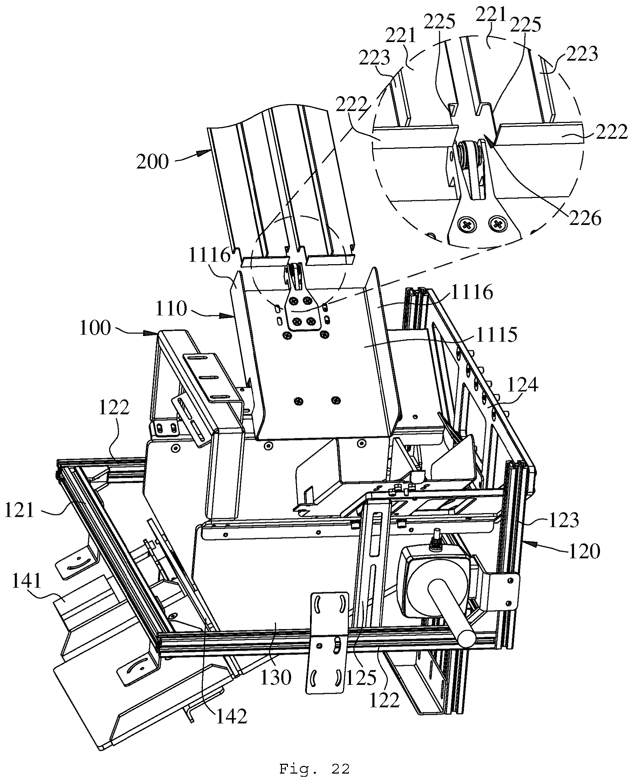

As shown in Fig. 22, the article retrieval assembly 110 according to the embodiment of the present application can retrieve the article on the shelf 200 from the shelf 200 and be configured to guide the article to slide into the article retrieval hopper 130.

When the article retrieval assembly 110 retrieves an article, the article retrieval assembly 110 moves to the bottom of the support plate 221 and passes through the recess 226 from bottom to top, so that the article retrieval assembly 110 can pick up the article located at the lowermost among a plurality of an article, and cause the article to climb over the baffle 222 to slide to the article retrieval assembly 110, and then slide to the article retrieval hopper 130 through the article retrieval assembly 110.

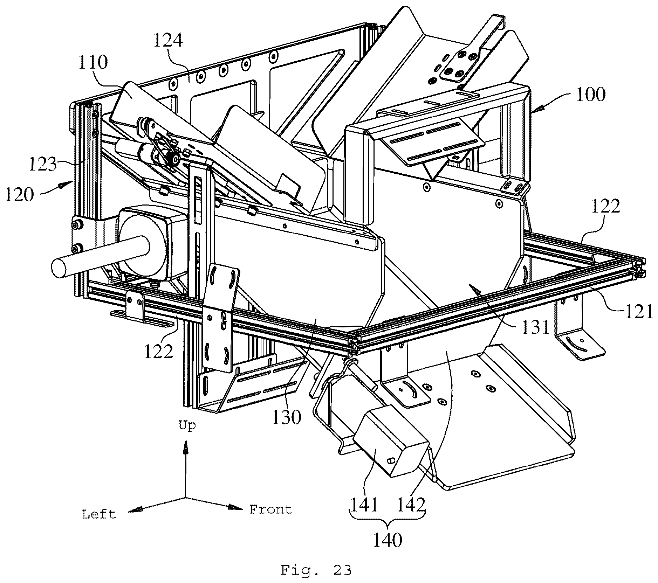

As shown in Fig. 23, the machine rack 120 includes a first cross beam 121, two second cross beams 122, two third longitudinal beams 123 and a back plate 124. The length direction of the first cross beam 121 is parallel to the left-right direction (the direction indicated by the arrow is left and the reverse direction is right), the length direction of the second cross beam 122 is parallel to the front-back direction (the direction indicated by the arrow is front and the reverse direction is rear), and the length direction of the third longitudinal beam 123 is parallel to the up-down direction (the direction indicated by the arrow is up and the reverse direction is down). Both ends of the first cross beam 121 along the left-right direction are connected with the front ends of the two second cross beams 122 respectively, and the lower ends of the two third longitudinal beams 123 are connected with the rear ends of the two second cross beams 122 respectively. The back plate 124 is connected to the two third longitudinal beams 123 and located at a rear side of the two third longitudinal beams 123. Among these, the left-right direction, the front-back direction and the up-down direction are perpendicular to each other.

The machine rack 120 further includes two support beams 125, the length direction of each support beam 125 is parallel to the up-down direction, and the two support beams 125 are connected to the two second cross beams 122 respectively.

Among these, the retriever 100 according to the embodiment of the present application includes two article retrieval assemblies 110, which are arranged oppositely along the left-right direction and connected with two support beams 125 respectively, and are also connected with the back plate 124.

The article retrieval hopper 130 is located in the space surrounded by the first cross beam 121 and the two second cross beams 122, and the article retrieval hopper 130 is connected to the two article retrieval assemblies 110.

Of course, in other embodiments, the number of the article retrieval assemblies 110 can also be one, three or other numbers. The article retrieval hopper 130 can be connected with the first cross beam 121 and the second cross beam 122.

As shown in Fig. 23, the article retrieval hopper 130 has a fourth outlet 131 for an article to slide out. The retriever 100 further includes an opening and closing assembly 140 for opening or closing the fourth outlet 131.

As an example, the opening and closing assembly 140 includes a drive mechanism 141 and a door member 142, wherein the door member 142 is movable between a first position to close the fourth outlet 131 and a second position to open the fourth outlet 131, and the drive mechanism 141 is connected to the article retrieval hopper 130 and connected to the door member 142 for driving the door member 142 to move. It can be understood that, by providing the opening and closing assembly 140, it is possible to control when an article in the article retrieval hopper 130 slide out of the article retrieval hopper 130.

Among these, the door member 142 is made of a transparent material, so that the fifth information acquisition unit 155 can take photos of the article in the article retrieval hopper 130 through the door member 142. The transparent material can include, but is not limited to, glass, acrylic, polycarbonate, etc.

It can be understood that, the drive mechanism 141 can be an electric motor (defined as a second electric motor) , an electric push rod or the like, which is not limited in the present application.

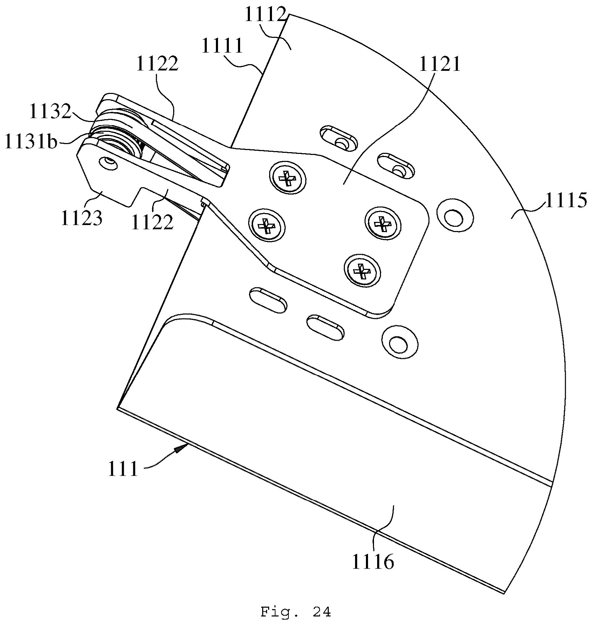

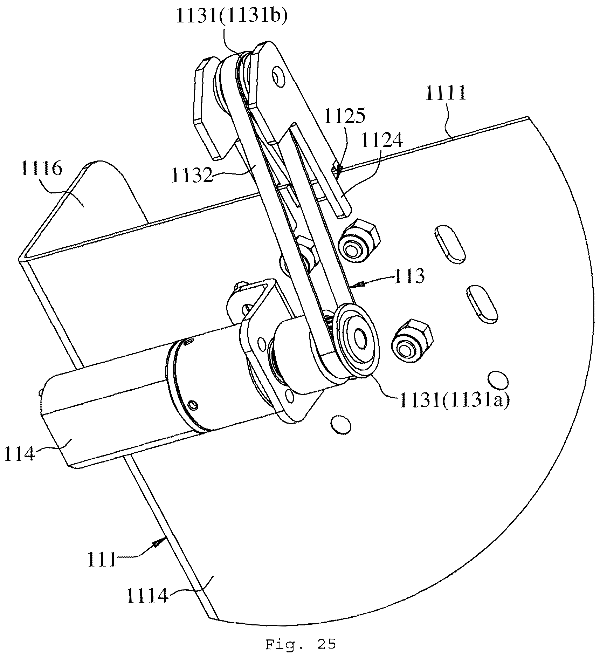

As shown in Figs. 24 and 25, the article retrieval assembly 110 according to the embodiment of the present application includes a ramp 111, a guide part 112, a rotary unit 113 and a first electric motor 114. The ramp 111 has an edge 1111. The guide part 112 is connected to the ramp 111, and the guide part 112 at least partially projects from the edge 1111; the rotary unit 113 is rotatably connected to part of the guide part 112 projecting from the edge 1111, and configured to generate friction with an article to drive the article to slide into the ramp 111 through the guide part 112; the first electric motor 114 is connected to the rotary unit 113 for driving the rotary unit 113 to rotate.

As shown in Fig. 22, when the article retrieval assembly 110 according to the embodiment of the present application retrieves an article, the guide part 112 and the rotary unit 113 at least partially pass through the recess 226 from bottom to top, and the first electric motor 114 drives the rotary unit 113 to rotate, and the article is driven to slide into the ramp 111 through the guide part 112 by a friction force between the rotary unit 113 and the article.

Thus it can be seen that, the article retrieval assembly 110 according to the embodiment of the present application can retrieve an article by rotating the rotary unit 113 and using a friction force generated between the rotary unit 113 and the article, so that its retrieval efficiency is significantly improved. Moreover, during the process of sliding into the article retrieval assembly 110, it is subjected to not only gravity of the article itself but also a frictional force, which significantly improves the success rate of the article sliding into the article retrieval assembly 110.

Among these, the ramp 111 has a target included angle relative to the horizontal plane, that is, the ramp 111 is arranged obliquely. The ramp 111 has a bottom plate 1115 and two side plates 1116, and both sides of the bottom plate 1115 along the front-back direction are connected with the two side plates 1116 respectively. By providing the side plate 1116, it is possible to prevent an article on the ramp 111 from slipping off a side of the ramp 111. The bottom plate 1115 of the ramp 111 has the edge 1111.

Continuing to refer to Figs. 24 and 25, the rotary unit 113 includes two rotary members 1131 and an annular member 1132. For ease of description, the two rotary members 1131 are defined as a first rotary member 1131a and a second rotary member 1131b respectively. The first rotary member 1131a is connected with the output shaft of the first electric motor 114, and the second rotary member 1131b is rotatably connected with a portion of the guide part 112 projecting from the edge 1111. The annular member 1132 is wound around the outer peripheries of the two rotary members 1131, and the outer side surface of the annular member 1132 is used to generate friction with an article. When the first electric motor 114 works, the first rotary member 1131a is driven to rotate, and the first rotary member 1131a drives the annular member 1132 to rotate, which in turn drives the second rotary member 1131b to follow. During the rotation process of the annular member 1132, the outer surface of the annular member 1132 can generate friction with an article, so that the article is dragged from the shelf 200 into the ramp 111 by a friction force.

As an example, the inner side surface of the annular member 1132 has a first tooth structure, and the outer side surface of each rotary member 1131 has a second tooth structure, and the first tooth structure is meshed with the second tooth structure. That is, in the embodiment of the present application, the rotary unit 113 is a synchronous belt structure. Among these, when the rotary unit 113 is a synchronous belt structure, the first rotary member 1131a is a synchronous wheel, the second rotary member 1131b is a driven wheel, and the annular member 1132 is a synchronous belt.

Of course, the rotary unit 113 is not limited to the synchronous belt structure. For example, in other embodiments, the rotary unit 113 includes a friction wheel and an electric motor. The friction wheel is rotatably connected to a portion of the guide part 112 projecting from the edge 1111, and the electric motor is connected with the friction wheel to drive the friction wheel to rotate, so that the friction wheel generates friction with an article to drive the article to slide into the ramp 111 through the guide part 112.

Continuing to refer to Figs. 24 and 25, the bottom plate 1115 of the ramp 111 also has a ramp surface 1112 for guiding an article to slide and a back surface 1114 opposite to the ramp surface 1112. One side of the ramp surface 1112 is an edge 1111, and the guide part 112 is attached to the ramp surface 1112. The first rotary member 1131a and the first electric motor 114 are both located on one side where the back surface 1114 is located, and the second rotary member 1131b is at least partially higher than the ramp surface 1112. In one embodiment, the first electric motor 114 is fixedly connected to the bottom plate 1115 of the ramp 111. In other embodiments, the first electric motor 114 can also be fixedly connected to the machine rack 120. The first electric motor 114 is located on one side where the back surface 1114 of the ramp 111 is located, which can not affect the sliding of an article on the ramp surface 1112.

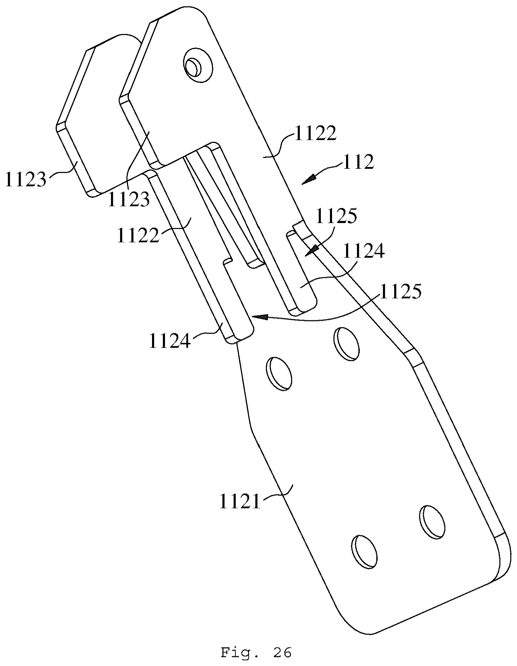

As shown in Figs. 25 and 26, the guide part 112 includes a connection portion 1121 and a pair of cantilevers 1122. The connection portion 1121 is connected to the ramp 111 and attached to the ramp surface 1112. A pair of cantilevers 1122 are connected to the connection portion 1121 and at least partially project from the edge 1111; wherein the rotary unit 113 is at least partially rotatably connected between a pair of cantilevers 1122.

In the embodiment of the present application, the second rotary member 1131b is rotatably connected between a pair of cantilevers 1122, and the annular member 1132 is at least partially located between the pair of cantilevers 1122. By rotatably arranging the second rotary member 1131b between the pair of cantilevers 1122, it is possible to improve a stable rotation of the second rotary member 1131b, so as to improve a stable rotation of the annular member 1132 and achieve the effect of stably retrieving an article.

It can be understood that, the connection portion 1121 and the ramp 111 can be divided structures or an integrated structure.

One end of the cantilever 1122 connected with the connection portion 1121 is provided with a reinforcement portion 1124. The reinforcement portion 1124 and the connection portion 1121 are located on both sides of the ramp 111 in the thickness direction of the ramp 111, and a clamping groove 1125 for insertion of the ramp 111 is formed between the reinforcement portion 1124 and the connection portion 1121. Specifically, the connection portion 1121 is located on one side where the ramp surface 1112 of the bottom plate 1115 of the ramp 111 is located, and the reinforcement portion 1124 is located on one side where the back surface 1114 of the bottom plate 1115 is located. When the guide part 112 is assembled with the ramp 111, one side where the edge 1111 of the ramp 111 is located is inserted into the clamping groove 1125 formed by the reinforcement portion 1124 and the connection portion 1121.

When an article slides onto the guide part 112, the cantilever 1122 of the guide part 112 might bend downward under the gravity of the article since the cantilever 1122 of the guide part 112 is suspended. In the embodiment of the present application, by providing the reinforcement portion 1124, the overall structural strength of the guide part 112 can be improved. When the cantilever 1122 has a downward bending tendency, the reinforcement portion 1124 can abut against the bottom plate 1115 of the ramp 111 to maintain the stability of the guide part 112.

As shown in Figs. 25 and 26, one end of each cantilever 1122 away from the connection portion 1121 is provided with a stop portion 1123, which protrudes from the cantilever 1122 along the thickness direction of the connection portion 1121, and protrudes along the leftward and downward direction for stopping an article.

As shown in Fig. 22, when the guide part 112 jacks up an article located at the lowermost through the recess 226 from bottom to top, the article slides onto the ramp 111 under the effect of own gravity of the article and a friction force between the annular member 1132 and the article. At this time, the remaining articles will automatically move towards the baffle 230 under the effect of own gravities.

In the embodiment of the present application, when the remaining articles automatically slide downwards on the support plate 221, the stopper 1123 can stop the article before the baffle 222. After the retriever 100 moves away from the recess 226, the remaining articles will continue to slide downward until they are blocked by the baffle 222. In other words, after the retriever 100 retrieves one piece of product, the sliding of the remaining articles to the baffle 222 is divided into two stages. In this way, it is possible to shorten a sliding distance of an article in each stage and prevent the article from breaking through the baffle 222 under a large inertia due to a too long sliding distance.

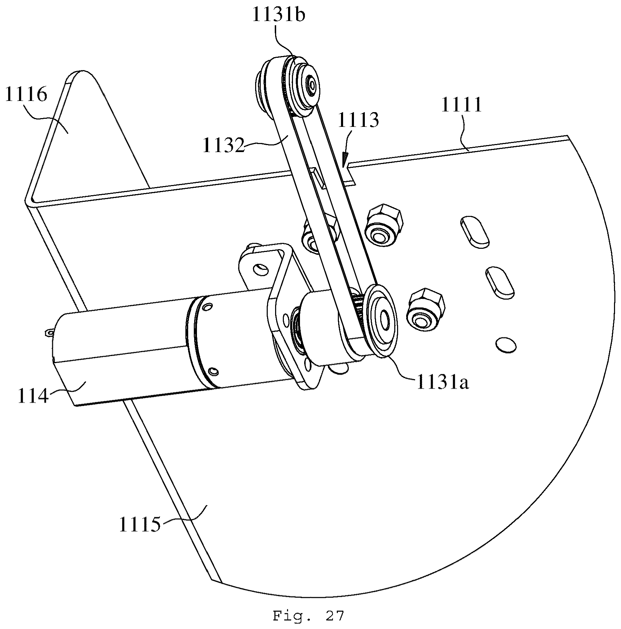

As shown in Fig. 27, the edge 1111 of the ramp 111 has an opening 1113 passing through the ramp surface 1112 and the back surface 1114, and the annular member 1132 is movably arranged to pass through the opening 1113.

In the embodiment of the present application, the annular member 1132 is movably arranged to pass through the opening 1113 of the ramp 111, so that it is possible to reduce a length of the guide part 112 projecting from the edge 1111 of the ramp 111, which not only saves the cost, but also prevents the guide part 112 from forming a long cantilever structure.

It can be understood that, in other embodiments, the article retrieval assembly 110 can also be other structures, for example, the article retrieval assembly 110 is a fork which moves to the bottom of the support plate 221 and passes through the recess 226 from bottom to top, so that the fork picks up an article located at the lowermost among a plurality of an article and cause the article to slide into the article retrieval hopper 130.

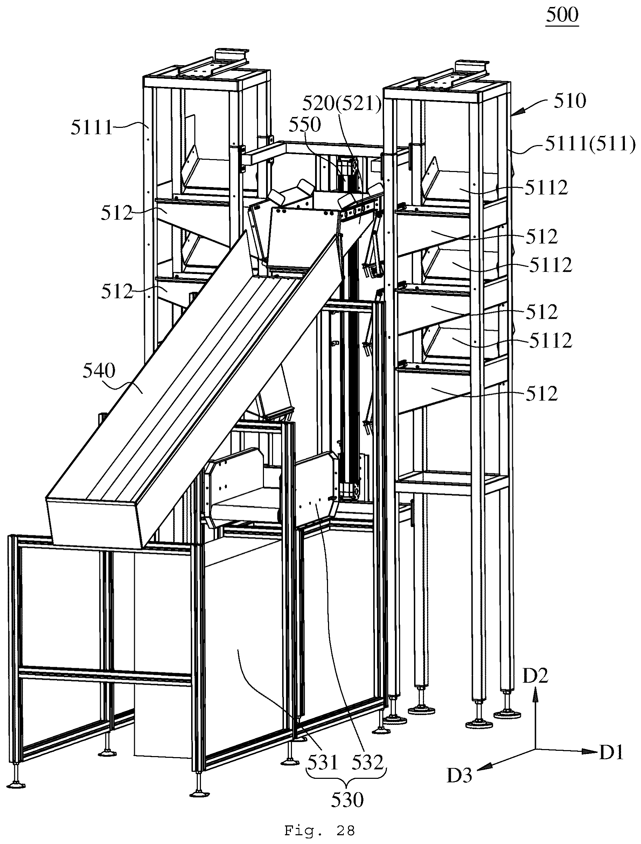

As shown in Fig. 28, the workstation 500 according to the embodiment of the present application further includes a buffer assembly 510 and a merge assembly 520. The buffer assembly 510 includes a buffer rack 511 and a plurality of buffer hoppers 512, wherein the plurality of buffer hoppers 512 are installed on the buffer rack 511 for receiving an article conveyed by the article retrieval mechanism 300. The number of buffer hoppers 512 is greater than or equal to that of the sorting hoppers 321. The merge assembly 520 is movably connected to the buffer rack 511 through the mobile assembly 550, and configured to receive an article in at least one buffer hopper 512 among the plurality of buffer hoppers 512, convey at least one article to the packing assembly 530, and convey an abnormal article to the abnormality processing assembly 540.

Among these, an abnormal product refers to an article falsely retrieved by the article retrieval mechanism 300, or one or several an article corresponding to an order canceled by the client.

The abnormality processing assembly 540 is configured to process an abnormal article. For example, in one embodiment, the abnormality processing assembly 540 can be a chute, which can convey an abnormal product to a designated location.

Of course, in other embodiments, the abnormality processing assembly 540 can also be a device for collecting an abnormal article.

In the embodiment of the present application, after the article retrieval mechanism 300 retrieves an article from the shelf, the traveling mechanism 400 drives the article retrieval mechanism 300 to move to the vicinity of the workstation 500, and all the article in the plurality of sorting hoppers 321 of the article retrieval mechanism 300 are transferred to a plurality of buffer hoppers 512 of the buffer assembly 510. Then, according to whether an article is abnormal, the merge assembly 520 conveys the article to the packing assembly 530 or the abnormality processing assembly 540. At this time, since the article transfer in the sorting hopper 321 of the article retrieval mechanism 300 has been completed, the traveling mechanism 400 can drive the article retrieval mechanism 300 to return to the shelf to perform a next retrieval action, without waiting for the merge assembly 520 to complete the article transfer before returning to the shelf to perform a next retrieval action.

Thus it can be seen that, the workstation 500 according to the embodiment of the present application includes a buffer assembly 510 and a merge assembly 520. The buffer assembly 510 can be configured to temporarily store an article conveyed by the article retrieval mechanism 300, and the merge assembly 520 can convey an article conveyed by the buffer assembly 510 to the packing assembly 530 or the abnormality processing assembly 540. When the merge assembly 520 transfers an article, the article retrieval mechanism 300 can perform a next retrieval action without waiting in place, which can significantly improve the retrieval efficiency and effectively enhance the ability of processing orders by the workstation 500.

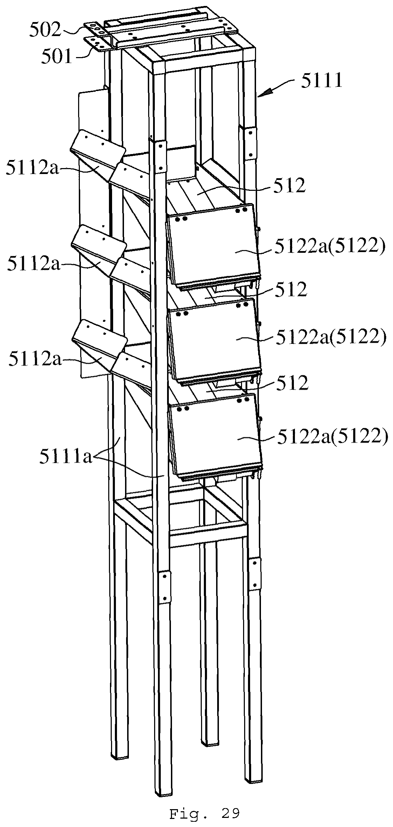

As shown in Figs. 28 and 29, as an example, the mobile assembly 550 can be a linear slide table. For example, the mobile assembly 550 includes a third slide rail 551 and a third slide block 552. The third slide rail 551 is connected to the buffer rack 511, and the length direction of the third slide rail 551 is parallel to the height direction (the second direction D2) of the buffer rack 511. The third slide block 552 is movably connected to the third slide rail 551, and the merge assembly 520 is connected to the third slide block 552.

Of course, in other embodiments, the mobile assembly 550 can also be other linear drive mechanisms, which will not be described in detail here.

In addition, the movement path of the merge assembly 520 relative to the buffer rack 511 through the mobile assembly 550 can not be straight, for example, it can also be arc, as long as it is satisfied that the article in different buffer hoppers 512 can be picked up by moving the merge assembly 520 relative to the buffer rack 511.

As shown in Fig. 28, the buffer rack 511 includes two frames 5111 arranged at intervals along the length direction (the first direction D1) of the buffer rack 511, and each frame 5111 is connected with a plurality of buffer hoppers 512 arranged at intervals along the height direction (the second direction D2) of the buffer rack 511; the number of the buffer hopper 512 connected to the same frame 5111 is greater than or equal to that of the sorting hopper 321. Along the height direction (the second direction D2) of the buffer rack 511, the merge assembly 520 is movably located between the two frames 5111.

It is to be noted that, in order to simplify the views, only one of the two frames 5111 in Fig. 12 is provided with the article retrieval mechanism 300 correspondingly, while the other frame 5111 is not provided with the article retrieval mechanism 300 correspondingly. In fact, the two frames 5111 in the present application can be provided with the article retrieval mechanism 300 correspondingly. In other words, the two frames 5111 of the workstation 500 correspond to two sets of article retrieval mechanisms 300 and traveling mechanisms 400 respectively, and the article retrieval mechanism 300 is liftably connected to a corresponding traveling mechanism 400. Along the first direction D1, the two traveling mechanisms 400 can move along the direction close to or away from each other. The two traveling mechanisms 400 can drive the two article retrieval mechanisms 300 to pick up the article on two shelves at different positions respectively.

In the embodiment of the present application, the merge assembly 520 is provided with a frame 5111 on both sides along the first direction D1, and each frame 5111 is provided with a plurality of buffer hoppers 512. In this way, the merge assembly 520 can receive the article from the buffer hoppers 512 located on different frames 5111, and convey the article to the packing assembly 530 for package.

For example, two articles corresponding to one order are located on different shelves respectively. At this time, two traveling mechanisms 400 are required to drive two article retrieval mechanisms 300 to retrieve two articles respectively and transfer them to the buffer hoppers 512 on two frames 5111 respectively.

In the embodiment of the present application, each frame 5111 is provided with three buffer hoppers 512. For ease of description, one frame 5111 thereof is provided with three buffer hoppers 512 with the serial numbers 1, 2 and 3 respectively, and the other frame 5111 is provided with three buffer hoppers 512 with the serial numbers 4, 5 and 6 respectively. If two articles corresponding to one order are conveyed to 1 and 6 by the two article retrieval mechanisms 300 respectively, the articles in 1 and 6 can be received sequentially through the merge assembly 520, and the two articles are simultaneously conveyed to the packing assembly 530 for package after merge.

As shown in Fig. 28, the packing assembly 530 includes a packer 531 and a buffer table 532. The packer 531 is configured to pack an article; and the buffer table 532 is configured to buffer an article conveyed by the merge assembly 520 and convey the article to the packer 531.

In the embodiment of the present application, the buffer table 532 can buffer an article to avoid that the packer 531 is damaged due to an excessive impulse when the article slides out from the merge assembly 520.

In one embodiment, the buffer table 532 can be a conveyor belt assembly, a conveyor roller assembly and the like, which is not particularly limited in the present application.

As shown in Fig. 29, each frame 5111 includes two second longitudinal beams 5111a arranged at intervals, and a plurality of guide parts 5112 arranged at intervals along the height direction (the second direction D2) of the buffer rack 511 are connected between the two second longitudinal beams 5111a. The plurality of guide parts 5112 correspond to a plurality of buffer hoppers 512 in the frame 5111 respectively, and each guide part 5112 has a guide slope 5112a for guiding an article to slide off from the article retrieval mechanism 300 into the buffer hopper 512. The plurality of sorting hoppers 321 of the article retrieval mechanism 300 can correspond to the plurality of guide parts 5112 provided in one frame 5111 respectively, so that the article slides off from the sorting hopper 321 into the buffer hopper 512 by means of the guide part 5112.

In one embodiment, the top of each frame 5111 is provided with an abutment member 501 and a pressing member 502.

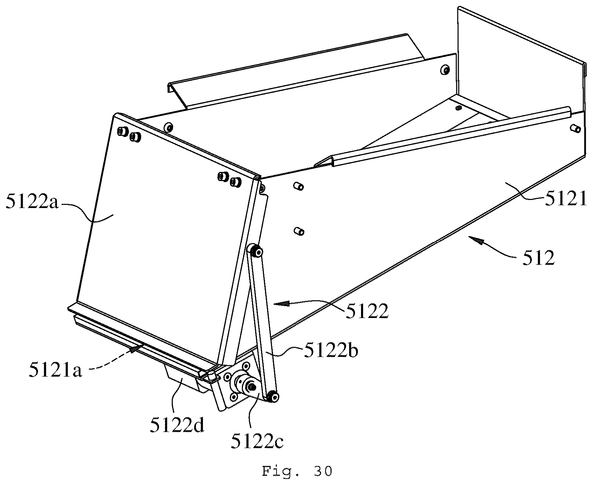

As shown in Fig. 30, the buffer hopper 512 includes a hopper body 5121 and a first cover assembly 5122. The hopper body 5121 is connected to the buffer rack 511 and has a second outlet 5121a; and the first cover assembly 5122 is connected to the hopper body 5121 for enclosing or opening the second outlet 5121a. When the first cover assembly 5122 is in a closed state, it can be used to stop an article in the hopper body 5121 from slipping out of the second outlet 5121a.

As an example, the first cover assembly 5122 includes a first cover plate 5122a, a first connecting rod 5122b, a second connecting rod 512c and a third electric motor 5122d. The first cover plate 5122a is rotatably connected to the hopper body 5121 for opening or enclosing the second outlet 5121a; one end of the first connecting rod 522b is hinged to a side of the first cover plate 5122a; one end of the second connecting rod 5122c is hinged to the other end of the first connecting rod 5122b; the third electric motor 5122d is connected to the hopper body 5121, and the output shaft of the third electric motor 5122d is connected to the other end of the second connecting rod 5122c.

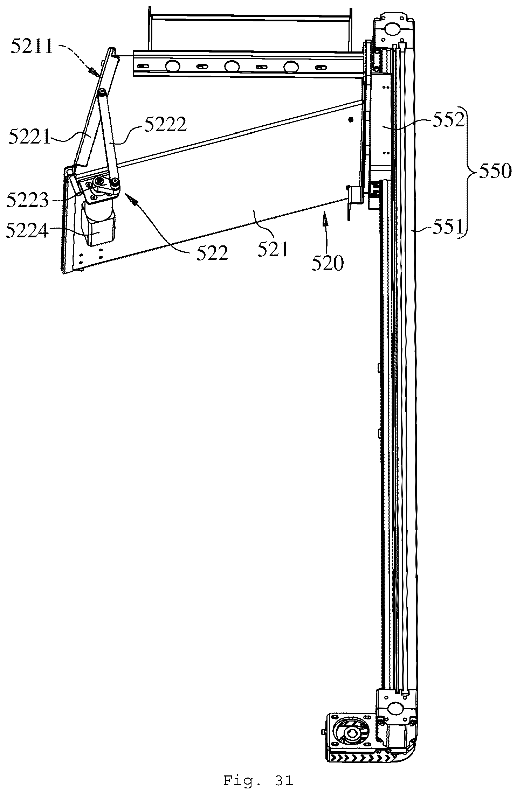

As shown in Fig. 31, the merge assembly 520 includes a merge hopper 521 and a second cover assembly 522. The merge hopper 521 is movably connected to the buffer rack 511 through the mobile assembly 550 and has a third outlet 5211. The second cover assembly 522 is connected to the merge hopper 521 for enclosing or opening the third outlet 5211. When the second cover assembly 522 is in a closed state, the article in the merge hopper 521 can be prevented from slipping out of the third outlet 5211.

As an example, the second cover assembly 522 includes a second cover plate 5221, a third connecting rod 5222, a fourth connecting rod 5223 and a fourth electric motor 5224. The second cover plate 5221 is rotatably connected to the merge hopper 521 for opening or enclosing the third outlet 5211; one end of the third connecting rod 5222 is hinged to a side of the second cover plate 5221; one end of the fourth connecting rod 5223 is hinged to the other end of the third connecting rod 5222; the fourth electric motor 5224 is connected to the merge hopper 521, and an output shaft of the fourth electric motor 5224 is connected to the other end of the fourth connecting rod 5223.

To sum up, the picking system according to the embodiment of the present application at least have the following advantages and beneficial effects:

Under the collaborative action of the workstation 500, the traveling mechanism 400 and the article retrieval mechanism 300, the picking system according to the embodiment of the present application can retrieve, transfer and pack the article located on the shelf 200, and in addition, can also remove an abnormal article, so as to ensure the accuracy and timeliness of delivery and guarantee the efficiency and correctness of the whole order processing flow.

It can be understood that, various embodiments/implementations provided in the present application can be combined with each other without contradiction, which will not be exemplified one by one here.

In the embodiments of this application, the terms "first", "second" and "third" are only used for descriptive purposes, but cannot be understood as indicating or implying relative importance; the term "a plurality of" refers to two or more unless otherwise explicitly defined. The terms such as "installation", "connected", "connection" and "fixing" should be understood broadly. For example, "connection" can be a fixed connection, a detachable connection or an integral connection; "connected" can be directly connected or indirectly connected through an intermediate medium. For those of ordinary skill in the art, the specific meanings of the above-described terms in the embodiments of this application can be understood according to specific conditions.

In the description of the embodiments of this application, it should be understood that, the azimuth or positional relationship indicated by the terms "upper", "lower", "left", "right", "front" and "rear" is based on the azimuth or positional relationship shown in the accompanying drawings, which is only for the convenience of describing the embodiments of this application and simplifying the description, but does not indicate or imply that the referred device or unit must have a specific direction, and be constructed and operated in a specific orientation. Therefore, it cannot be understood as limiting the embodiments of this application.

In the description of this specification, the terms such as "one embodiment", "some embodiments" and "specific embodiments" mean that the specific features, structures, materials or characteristics described in connection with this embodiment or example are included in at least one embodiment or example of the embodiments of this application. In this specification, the schematic expressions of the above-described terms do not necessarily refer to the same embodiment or example. Moreover, the specific features, structures, materials or characteristics described can be combined in any one or more embodiments or examples in a suitable manner.

The above which is only the preferred embodiment of the embodiments of this application, is not used to limit the embodiments of this application. For those skilled in the art, various modifications and changes can be made to the embodiments of this application. Any modification, equivalent substitution, improvement and the like made within the spirit and principles of the embodiments of this application shall be included in the protection scope of the embodiments of this application.

## Claims

1. A picking system, comprising:
a shelf (200) for storing an article;
a workstation (500) arranged on the ground and comprising a packing assembly (530);
a traveling mechanism (400) movable between a first position proximate to the shelf (200) and a second position proximate to the workstation (500); and
an article retrieval mechanism (300) liftably connected to the traveling mechanism (400), and configured to retrieve the article located on the shelf (200) when the traveling mechanism (400) is located at the first position, and convey the retrieved article to the workstation (500) when the traveling mechanism (400) is located at the second position, so that the packing assembly (530) packs a normal article.

2. The picking system according to claim 1, wherein the workstation (500) further comprises:
a buffer assembly (510) comprising a buffer rack (511) and a plurality of buffer hoppers (512), wherein the plurality of buffer hoppers (512) are installed on the buffer rack (511) and configured to receive an article conveyed by the article retrieval mechanism (300) ; wherein the number of the buffer hoppers (512) is greater than or equal to that of the sorting hoppers (321) of the article retrieval mechanism (300); and
a merge assembly (520) movably connected to the buffer rack (511) through a mobile assembly (550) and configured to receive an article in at least one of the plurality of buffer hoppers (512) and convey at least one normal article to the packing assembly (530).

3. The picking system according to claim 2, wherein the mobile assembly (550) comprises a third slide rail (551) and a third slide block (552) , wherein the third slide rail (551) has a length direction parallel to a height direction of the buffer rack (511) and connected to the buffer rack (511), and the third slide block (552) is movably connected to the third slide rail (551); and
the merge assembly (520) is connected to the third slide block (552).

4. The picking system according to claim 2, wherein the buffer rack (511) comprises two frames (5111) arranged at intervals along a length direction of the buffer rack (511), and each of the frames (5111) is connected with the plurality of buffer hoppers (512) arranged at intervals along the height direction of the buffer rack (511); the number of the plurality of buffer hoppers (512) connected with the same frame (5111) is greater than or equal to that of the sorting hoppers (321); and
along the height direction of the buffer rack (511), the merge assembly (520) is movably located between the two frames (5111).

5. The picking system according to claim 4, wherein each of the frames (5111) comprises two second longitudinal beams (5111a), and a plurality of guide parts (5112) arranged at intervals along the height direction of the buffer rack (511) are connected between the two second longitudinal beams (5111a), the plurality of guide parts (5112) correspond to the plurality of buffer hoppers (512) within the frame (5111) respectively, and each of the guide parts (5112) has a guide slope (5112a) for guiding the article to slide off from the article retrieval mechanism into the buffer hopper (512).

6. The picking system according to claim 2, wherein the workstation (500) further comprises an abnormality processing assembly (540), and the merge assembly (520) is configured to convey an abnormal article to the abnormality processing assembly (540).

7. The picking system according to claim 1, wherein the article retrieval mechanism (300) comprises:
a liftable frame (310) liftably connected to the traveling mechanism (400);
a retriever (100) movably connected to the liftable frame (310) through a mobile assembly (330); and
a sorting assembly (320) connected to the liftable frame (310) and comprising a plurality of sorting hoppers (321);
wherein the retriever (100) is configured to retrieve an article located on the shelf (200) and convey the article to any one of the plurality of sorting hoppers (321).

8. The picking system according to claim 7, wherein the mobile assembly (330) comprises:
a first mobile unit (330a) for driving the retriever (100) to move along a second direction; and
a second mobile unit (330b) for driving the retriever (100) to move along a third direction; wherein the second direction is perpendicular to the third direction;
wherein the liftable frame (310) moves up and down along the second direction, and the plurality of sorting hoppers (321) are arranged side by side along the second direction or the third direction.

9. The picking system according to claim 8, wherein the first mobile unit (330a) comprises a first slide rail (331) and a first slide block (332), the first slide rail (331) is connected to the liftable frame (310), and the first slide block (332) is movably connected to the first slide rail (331) along the second direction;
the second mobile unit (330b) comprises a second slide rail (333) and a second slide block (334), wherein the second slide rail (333) is connected to the first slide block (332), and the second slide block (334) is movably connected to the second slide rail (333) along the third direction; and
the retriever (100) is connected to the second slide block (334) .

10. The picking system according to claim 7, wherein each of the sorting hoppers (321) has a first outlet (321a) for the article to slide out;
the sorting assembly (320) further comprises a shield (322) movably connected to the liftable frame (310) between a third position and a fourth position, and the shield (322) is provided with a plurality of second windows (322a) ; when the shield (322) is located at the third position, the shield (322) simultaneously encloses the plurality of first outlets (321a); when the shield (322) is located at the fourth position, the plurality of second windows (322a) communicate with the first outlets (321a) of the plurality of sorting hoppers (321) respectively.

11. The picking system according to claim 10, wherein the sorting assembly (320) further comprises an elastic member (323) connected to the liftable frame (310) and the shield (322) for providing an elastic force to the shield (322) to cause the shield (322) to move to the third position.

12. The picking system according to claim 10, wherein the shield (322) is movably connected to the liftable frame (310) along a lifting direction of the liftable frame (310); the shield (322) is provided with a trigger (322b);
the workstation (500) is provided with an abutment member (501), and respective orthographic projections of the abutment member (501) and the trigger (322b) on a target plane have overlapping first projections; the target plane is perpendicular to the lifting direction of the liftable frame (310); and
when the liftable frame (310) descends, the abutment member (501) is configured to abut against the trigger (322b) so as to cause the shield (322) to move from the third position to the fourth position.

13. The picking system according to claim 12, wherein the workstation (500) further comprises a pressing member (502);
along the lifting direction of the liftable frame (310), the trigger (322b) is at least partially located between the pressing member (502) and the abutment member (501); respective orthogonal projections of the pressing member (502) and the trigger (322b) have overlapping second projections on the target plane; and
when the liftable frame (310) ascends, the pressing member (502) is configured to stop the trigger (322b).

14. The picking system according to claim 1, wherein the article retrieval mechanism (300) comprises:
a machine rack (120);
an article retrieval unit (100a) installed on the machine rack (120), and comprising an article retrieval assembly (110) and an article retrieval hopper (130) made of a transparent material, wherein the article retrieval assembly (110) is configured to retrieve an article stored on the shelf (200) and convey the article into the article retrieval hopper (130); and
a plurality of information acquisition units (150) arranged around the article retrieval hopper (130) for acquiring preset information of the article located in the article retrieval hopper (130).

15. The picking system according to claim 14, wherein the article retrieval hopper (130) comprises a slide plate (132) arranged obliquely and two vertical plates (133), and the two vertical plates (133) are connected to both sides of the slide plate (132) in a width direction of the slide plate (132) respectively, and form a fourth outlet (131) for the article to slide out;
the plurality of information acquisition units (150) are information acquisition devices, and comprise a first information acquisition unit (151), a second information acquisition unit (152), a third information acquisition unit (153), a fourth information acquisition unit (154), a fifth information acquisition unit (155) and a sixth information acquisition unit (156);
the first information acquisition unit (151) and the second information acquisition unit (152) are located on both sides of the slide plate (132) in a thickness direction of the slide plate (132) respectively, and lens surfaces of the first information acquisition unit (151) and the second information acquisition unit (152) face towards the slide plate (132);
the third information acquisition unit (153) and the fourth information acquisition unit (154) are located on opposite sides of the two vertical plates (133) respectively, and lens surfaces of the third information acquisition unit (153) and the fourth information acquisition unit (154) face towards respective corresponding vertical plates (133) respectively;
the fifth information acquisition unit (155) is arranged on one side where the fourth outlet (131) of the article retrieval hopper (130) is located, lens surface of the fifth information acquisition unit (155) faces towards the fourth outlet (131), the sixth information acquisition unit (156) is arranged on one side away from the fourth outlet (131) in the length direction of the article retrieval hopper (130), and lens surface of the sixth information acquisition unit (156) faces towards space between the two vertical plates (133).

16. The picking system according to claim 14, wherein the number of the article retrieval assemblies (110) is two, and the article retrieval assemblies (110) are arranged oppositely along a left-right direction of the machine rack (120).

17. The picking system according to claim 1, wherein the article retrieval mechanism (300) comprises an article retrieval assembly (100) comprising:
a ramp (111) having an edge (1111);
a guide part (112) connected to the ramp (111), and at least partially projecting from the edge (1111);
a rotary unit (113) rotatably connected to a portion of the guide part (112) projecting from the edge (1111), and configured to generate friction with an article to drive the article to slide into the ramp (111) through the guide part (112); and
a first electric motor (114) connected with the rotary unit (113) for driving the rotary unit (113) to rotate.

18. The picking system according to claim 17, wherein the rotary unit (113) comprises:
two rotary members (1131), one of which is connected with an output shaft of the first electric motor (114) and the other of which is rotatably connected with a portion of the guide part (112) projecting from the edge (1111); and
an annular member (1132) arranged around a periphery of the two rotary members (1131), wherein an outer side surface of the annular member (1132) is configured to generate friction with the article.

19. The picking system according to claim 17, wherein the guide part (112) comprises:
a connection portion (1121) connected to the ramp (111); and
a pair of cantilevers (1122) connected to the connection portion (1121) and at least partially projecting from the edge (1111);
wherein the rotary unit (113) is at least partially rotatably connected to the pair of the cantilevers (1122) and disposed between the pair of the cantilevers (1122).

20. The picking system according to claim 19, wherein one end of each of cantilevers (1122) away from the connection portion (1121) is provided with a stop portion (1123), which protrudes from the cantilever (1122) along a thickness direction of the connection portion (1121) for stopping the article.

21. The picking system according to claim 19, wherein one end of the cantilever (1122) connected with the connection portion (1121) is provided with a reinforcement portion (1124), and the reinforcement portion(1124) and the connection portion (1121) are located on both sides of the ramp (111) in the thickness direction of the ramp (111) respectively, and a clamping groove (1125) for insertion of the ramp (111) is formed between the reinforcement portion (1124) and the connection portion (1121).

22. The picking system according to claim 1, wherein the traveling mechanism (400) comprises:
a first traveling seat (420) movably connected to a ground rail (401);
a second traveling seat (430) movably connected to an overhead rail (402);
an upright post (410), wherein two axial ends of the upright post (410) are connected to the first traveling seat (420) and the second traveling seat (430) respectively; and the article retrieval mechanism (300) is liftably connected to the upright post (410) ; and
a driving assembly (440) comprising a third electric motor (441), a transmission shaft (442), a first driving portion (443) connected to the first traveling seat (420) and a second driving portion (444) connected to the second traveling seat (430), wherein two axial ends of the transmission shaft (442) are connected to the first driving portion (443) and the second driving portion (444) respectively, and the third electric motor (441) is connected to the first traveling seat (420) and drivingly connected with the first driving portion (443); and the first driving portion (443) is configured to drive the first traveling seat (420) to move along the ground rail (401), and the second driving portion (444) is configured to drive the second traveling seat (430) to move along the overhead rail (402).

23. The picking system according to claim 22, further comprising:
a first transmission member (450) fixedly arranged relative to the ground rail (401) and drivingly connected with the first driving portion (443); and
a second transmission member (460) fixedly arranged relative to the overhead rail (402) and drivingly connected with the second driving portion (444).

24. The picking system according to claim 23, wherein the first driving portion (443) comprises:
a first steering gear (4431) having a first input shaft, a first output shaft and a second output shaft, wherein the first input shaft is connected with the third electric motor (441) and the first output shaft is connected with one axial end of the transmission shaft (442); and
a first rotary member (4432) connected with the second output shaft and drivingly connected with the first transmission member (450).

25. The picking system according to claim 23, wherein the second driving portion (444) comprises:
a second steering gear (4441) having a second input shaft and a third output shaft, wherein the second input shaft is connected with the other axial end of the transmission shaft (442); and
a second rotary member (4442) connected with the third output shaft, and drivingly connected with the second transmission member (460).
